# EUROPÄISCHE PATENTANMELDUNG

(11) **EP 0 955 231 A1**
(43) Veröffentlichungstag der Anmeldung: **10.11.1999**
(21) Anmeldenummer: 98104132.0
(22) Anmeldetag: 09.03.1998
(51) Int. Cl.: B62D 37/04

(54) **Antikippkraftgenerator (AKG) für Fahrzeuge**

(71) Anmelder: Kastriot, Merlaku, 84347 Pfarrkirchen (DE)
(72) Erfinder: Kastriot, Merlaku, 84347 Pfarrkirchen (DE)

(57) **Zusammenfassung**

Wenn das Fahrzeug, das eine quer, waagerecht und fest liegend gelagerte Achse Z enthält, um die sich zwei oder mehrere Massen schnell in Gegendrehrichtung im Verhältnis zu den Räder des Fahrzeugs drehen, wobei der Schwerpunkt aller Massen sich in der Achse Z befindet, ein Ausweichmanöver absolviert oder Kurvenfährt, dann werden die Massen jeweils um die Achsen der Reihe H sinusförmig schwingen, und das mit einer Frequenz, welche der Umdrehungen pro Sekunde der Masse um die Achse Z entspricht. Werden diese Schwingungen in eine bestimmte Richtung gedämpft, und das nur, wenn der Schwerpunkt der Masse in einem engen Sektor (bzw. Phasenanschnitt), der eine senkrechte Achse (Y) zu der Achse Z enthält, liegt, wird diese Dämpfung die im Antikippkraftgenerator stattfindet, dem Fahrzeug eine Kraft übermitteln, die das Umkippen des Fahrzeugs verhindert (bzw. ausschliesst). Die Antikippkraft besteht aus einer grossen Zahl von Kraft-impulsen die mit einer hohen Frequenz erzeugt werden.

Eine ähnliche Kraft wird auch durch die ringförmigen Rohre (1), mit schnell fliessender Flüssigkeit (2) gefüllt, sowie andere beschriebene Antikippkraftgeneratoren, erreicht.

## Beschreibung

Die Erfindung betrifft einen Generator, der eine Kraft erzeugt, die das Umkippen eines Fahrzeugs während Ausweichmanöver oder Kurvenfahrt verhindert (bzw. ausschliesst). Sie ist in Kraftfahrzeugen und Fahrzeuganhängern,sowie Schienenfahrzeugen,einsetzbar. Denkbar ist auch die Einsatz in Luftfahrzeugen und Weltraumfahrzeugen.

Es ist bekannt, dass sich Fahrzeughersteller öfters mit der Problematik der Sicherheit des Fahrzeugs während Ausweichbewegungen und Kurvenfahrten beschäftigen. Da es öfters vorkommt, dass die Fahrzeuge ein mehrfaches Ausweichmanöver bei einer relativ hohen Geschwindigkeit nicht absolvieren können, weil sie zu stark schaukeln und sogar zu kippen drohen. Dass dieses Problem immer noch nicht gelöst wurde, beweisen aktuelle Berichte die in Fachzeitschriften geschildert worden sind, z.b.:
1. "Auto Motor und Sport" Heft 24, 14.November 1997 Verlag: Vereinigte Motor-Verlage GmbH&Co.KG, 70174 Stuttgart, Leuschner str.1 Seiten: 12, 13, 14, 15.
2. "Auto Zeitung" Heft Nr.24, 07.November 1997 Heinrich Bauer Spezialzeitschriften Verlag KG, Köln Industriestrasse 16, 50735 Köln Seiten: 32, 33, 34, 35, 36, 37.
3. "Fokus" Nr.47, 17.November 1997 Arabellastrasse 23, 81925 München Seiten: 354, 355, 356, 358.
4. "Auto Test Technik" Nr.24, 08.November 1997 Verleger: Paul Pietsch Verlag: Vereinigte Motor-Verlage GmbH&Co.KG Leuschnerstrasse 1, 70174 Stuttgart Seiten: 3, 6, 7.
5. "Stern" Heft Nr.1, 23.12.1997 GRUNER+JAHR AG&Co.Druck-und Verlagshaus: Am Baumwall 11, 20444 Hamburg Seiten: 116, 117.
6. "Bild" 19.Dezember 1997 Verlag u. Druck: Axel Springer Verlag AG, Brieffach 3410, 20350 Hamburg Seiten: 1, 8.
7. "Auto Journal" Heft Nr.3, März 1998 Neuer Auto Verlag Hansastrasse 4a, 91126 Schwabach Seite: 5.

Das geschilderte Problem kommt besonders stark vor, wenn die Geschwindigkeit des Fahrzeugs und dessen Schwerpunkt etwas höher sind. Beim mehrfachen Ausweichmanöver steigt die Tendenz zum kippen. Je höher der Schwerpunkt und die Geschwindigkeit,und je abrupter das Ausweichmanöver,desto höher ist die Kippgefahr.
Mit dieser Erfindung wird das Problem perfekt gelöst. In Zukunft wird es egal sein, wie hoch der Schwerpunkt eines fahrendes Fahrzeugs liegt. Das Umkippen in der Kurve, beim Abbiegen oder bei Ausweichmanöver wird verhindert, vorausgesetzt, dass das Fahrzeug nicht zu stark ins Schleudern kommt.

Die Erfindung ist ein Kombiniertes System von mehreren Einheiten, die eine einzige Aufgabe haben:
Dem Fahrzeug während Kurvenfahrt oder Ausweichmanöver, Stabilität, Kippsicherheit und einen sehr guten Bodenkontakt, durch fast gleichmässige Druckkraft auf die kurvenäusseren und kurveninneren Räder, zu geben.
Die technischen Systeme die hier beschrieben werden, können in einem Fahrzeug kombiniert oder auch als Einzelsysteme eingebaut werden, je nach Bedarf und Lösungsmöglichkeiten.

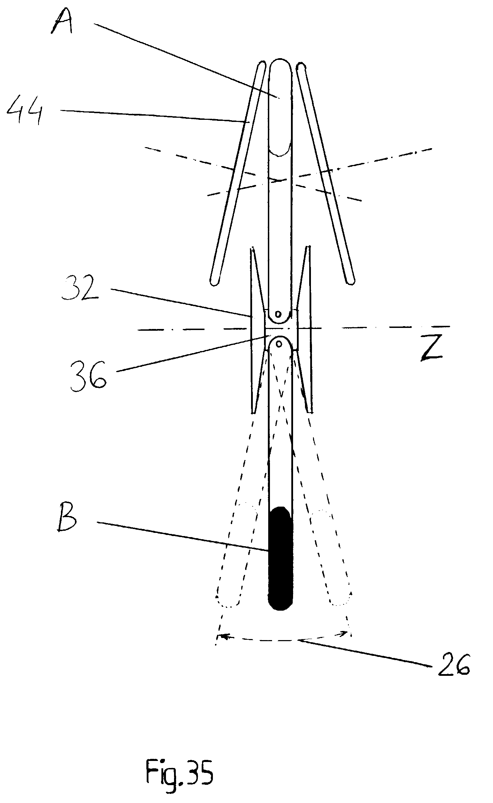

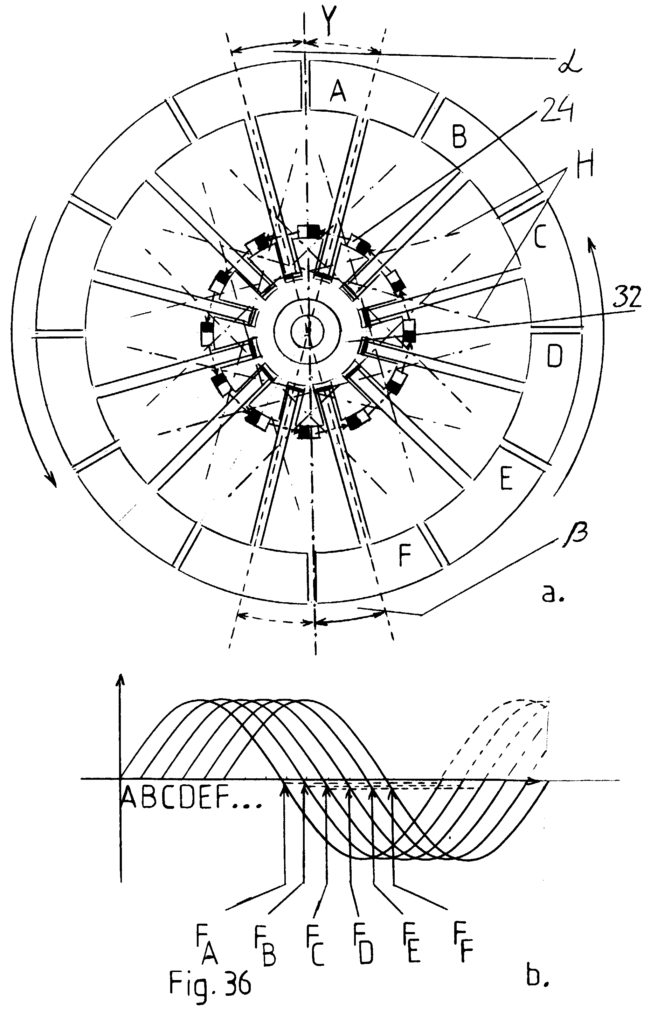

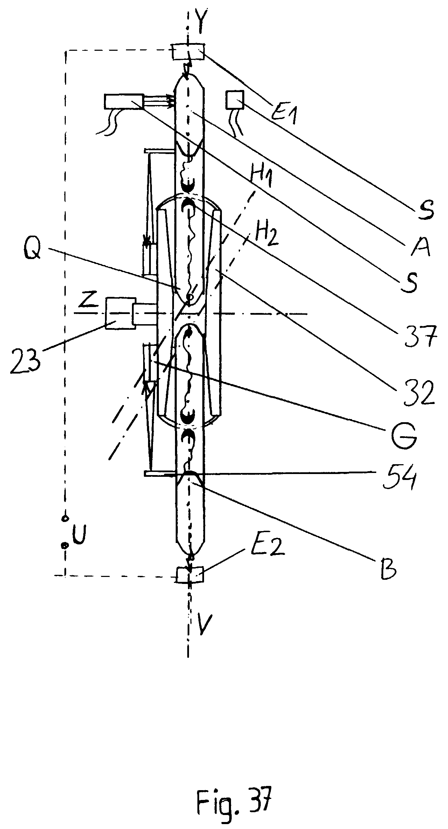

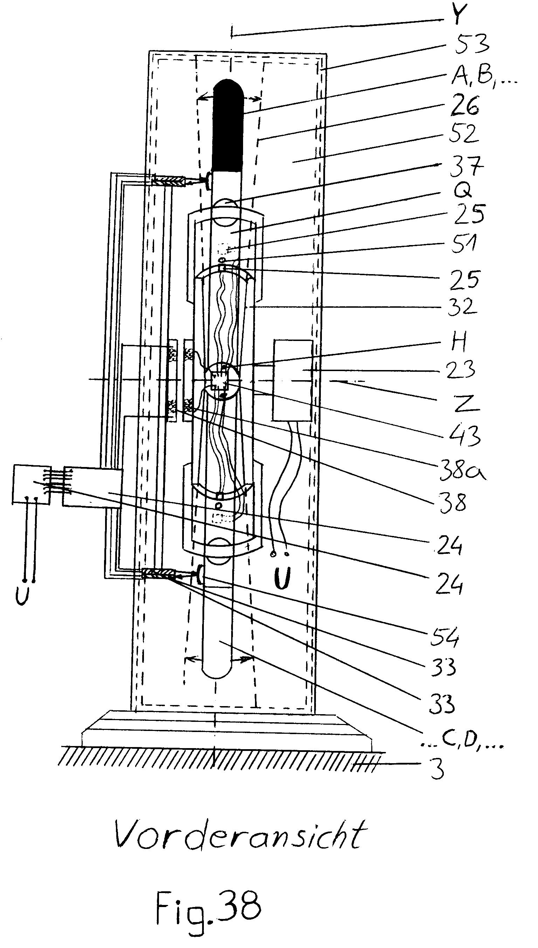

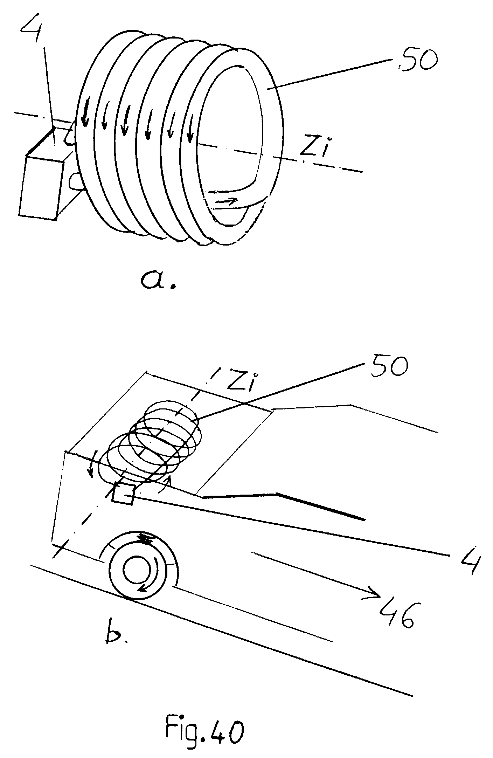

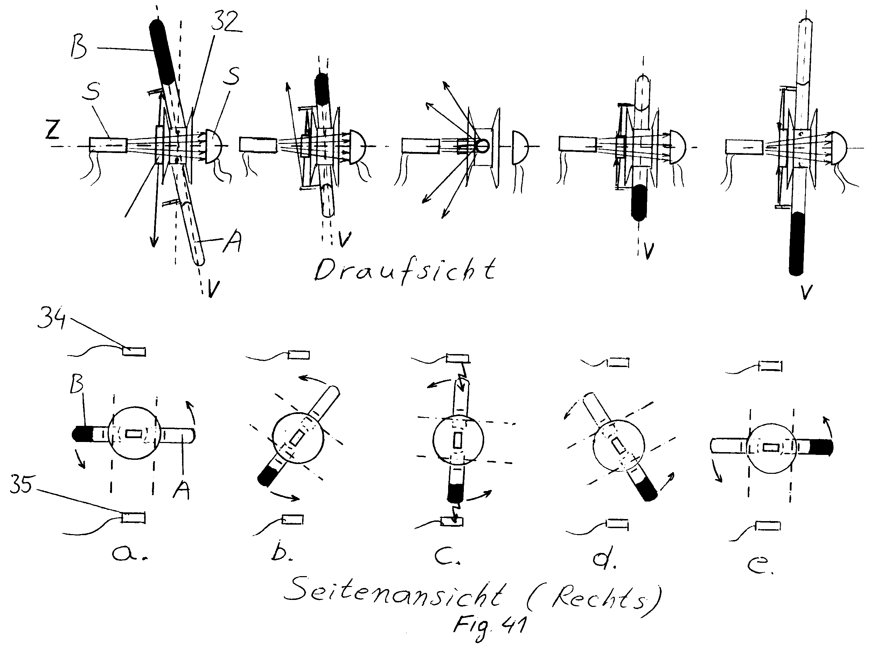

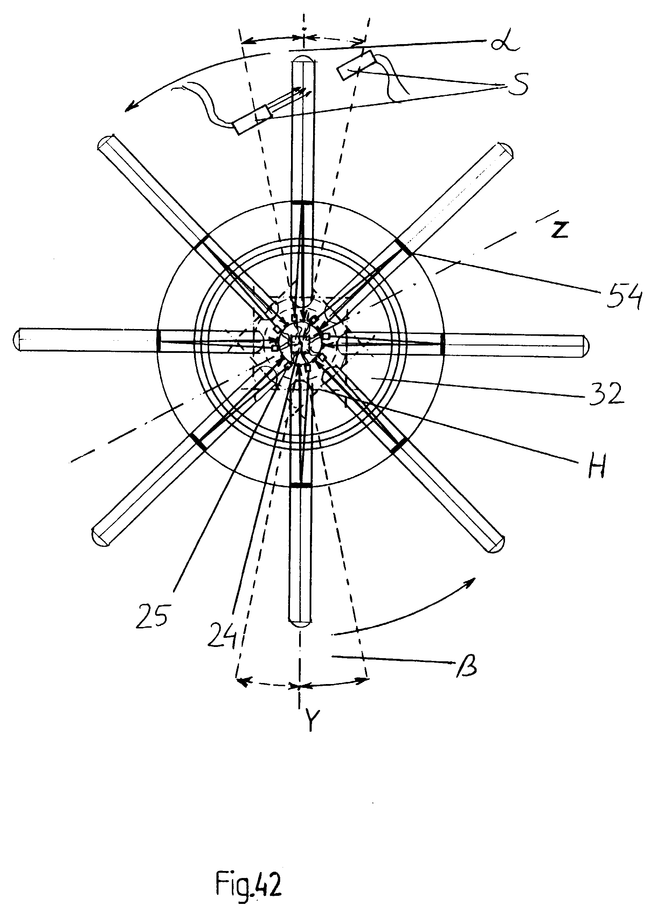

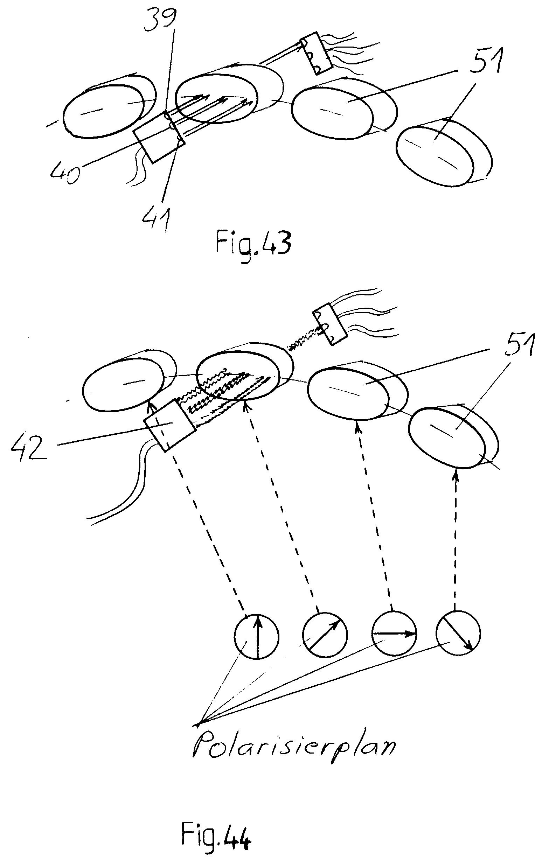

Eine Variante die sehr interessant ist, wird in den Fig.35,36,37,38,39,41 und 42 dargestellt. Hier handelt es sich um eine Variante mit zwei oder mehreren schnell rotierenden Massen (A,B,C,...). Diese sind jeweils um eine eigene Achse der Reihe H (Fig. 35,36,37,38,39,41,42) in einem begrenzten Winkel drehbar. Die Achse Z bildet mit jeder Achse der Reihe H (H1,H2,H3,...) einen 90°-Winkel.Während der Zeit, in der das Fahrzeug geradeausfährt, sind alle Schwerpunkte der um die Achse Z rotierenden Massen (A,B,C,...) in einem Plan V, der auch das Rotierpunktzentrum enthält. In diesem fall bildet die Achse Z mit dem Plan V einem Rechten Winkel. Sobald das Fahrzeug seine Fahrtrichtung ändert (nach links oder rechts), ändert sich gleichzeitig die Richtung der Achse Z. Da die Zentrale Scheibe 32 in die gelagerte Achse Z fest montiert ist, ändert sie auch ihre Richtung. Der Plan V, der die Schwerpunkte der Massen (A,B,C,...) enthält,bildet jetzt keinen Rechten Winkel mehr mit der Achse Z (Fig.41). Bei jeder Umdrehung um die Achse Z, befinden sich die Schwerpunkte der Massen, zwei mal sehr kurz, in eine rechtwinkligen Position zu Achse Z. Das ist der Moment, in dem der Schwerpunkt der rotierenden Masse (z.b. A oder B oder...) sich in einer senkrechten Linie (Achse Y) zur Achse Z befindet (Fig.36, 37). In diesem Zeitpunkt greift die elektronische Steuerung des Systems, sodass die Masse blockiert wird, um die Achse H frei zu drehen. Das dauert sehr kurz, und wird durch Sensoren (S, G, 25) und (oder) Elektroden (E1, E2) gesteuert, die den Rotor Q mit dem notwendigen Strom zur Steuerung der Piezo (magnetostricktive, elektromagnetische, o.ä.) Elemente versorgen. Bei der Herstellung wird das Gehäuse, in dem der Rotor Q sich befindet, vakuumiert und leicht mit Edelgasen gefüllt. Der Druck der Gase muss sehr gering sein. Die Elektroden sind durch Sensoren S und G (Fig. 36, 40c) gesteuert, und haben die Aufgabe, unter hoher Spannung, einen Stromkreis zu schliessen, wenn sich die Masse (A oder B,oder C,oder,...) in ihrer unmittelbaren Nähe befindet, vorausgesetzt die Sensoren G und S das erlauben, bzw. die Elektroden unter Spannung setzen. Dann wird ohne mechanischem Kontakt ein Funke das Edelgas ionisieren, überbrückt ihn und ermöglicht einen Stromfluss senkrecht durch den Rotor Q und setzt damit gezielt die Blockiersystemen 37 der bestimmten Achsen H (entsprechend zu die Betroffene Massen) in Bewegung. Der Strom fliesst durch die andere Elektrode aus dem Rotor Q (Fig.37), und somit ist der Stromkreis geschlossen. Dieser Vorgang ist von dem Druck der Gase, die sich im Gehäuse befinden, der elektrischen Spannung und dem Abstand der Elektroden (E1, E2) von den Massen (A, B, C,...) abhängig. Eine wichtige Rolle spielen hier die Sensoren G (Licht-IR-LASER o.ä. schranke), die eine rechtwinklige Position der Plan V mit der Achse Z überwachen, und die länger als die Sensoren S aktiviert bleiben ( Fig.36, 40). Sobald eine Abweichung festgestellt wird, werden die Sensoren G und S aktiviert und dementsprechend die Elektroden (E1, E2) unter Spannung gesetzt, um eine Kurskorrektur durchzuführen, bzw. die Schwingungen dämpfen zu können (Fig.41).
Die notwendige elektrische Energie für den Rotor Q kann auch von aussen durch elektromagnetische Spulen berührungslos zugeführt werden, oder er kann diese Energie auch selber herstellen, mit hilfe von elektromagnetischen Spulen (in die Zentrale scheibe 32 eingebaut ) und elektro-oder Permanentmagneten im Stator (Fig.43). Die elektro-oder Permanentmagneten im Stator, können mit hohe Geschwindigkeit in Gegenrichtung drehen. In diesem Fall sind die Sensoren G (die eine rechtwinklige Position der Plan V mit der Achse Z überwachen) direkt im Rotor Q (bzw. im Zentrale scheibe 32 ) eingebaut, und das für jede Masse (A,B,C,...) einzeln (Fig.42). Wenn einmal der Schwerpunkt einer Masse, ausserhalb der rechtwinkligen Plan zu der Achse Z sich befindet, dann aktiviert der Sensor G den elektronischen Schalter M, der sich auch in der Zentrale scheibe 32 befindet. Um die Kurskorrektur durchzuführen, ist noch die Aktivierung des Schalters N notwendig. Er aktiviert sich erst dann, wenn die Masse (A,B,C,...) während dem Rotieren sich auf der Achse Y befindet (Fig.44).

Eine andere Variante geht davon aus, dass die Schwingungen jeder einzelnen Masse um die Achsen der Reihe H, die tangential zu einem Kreis ( mit Zentrum auf die Achse Z) dessen Plan rechtwinklig zu der Achse Z ist, angeordnet sind, durch elektronische Steuerung immer dann gedämpft werden wird,wenn der Wert Null der Potentialen Energie am ende einer Halbperiode erreicht wird, egal wo die Masse während dem rotieren sich befindet.

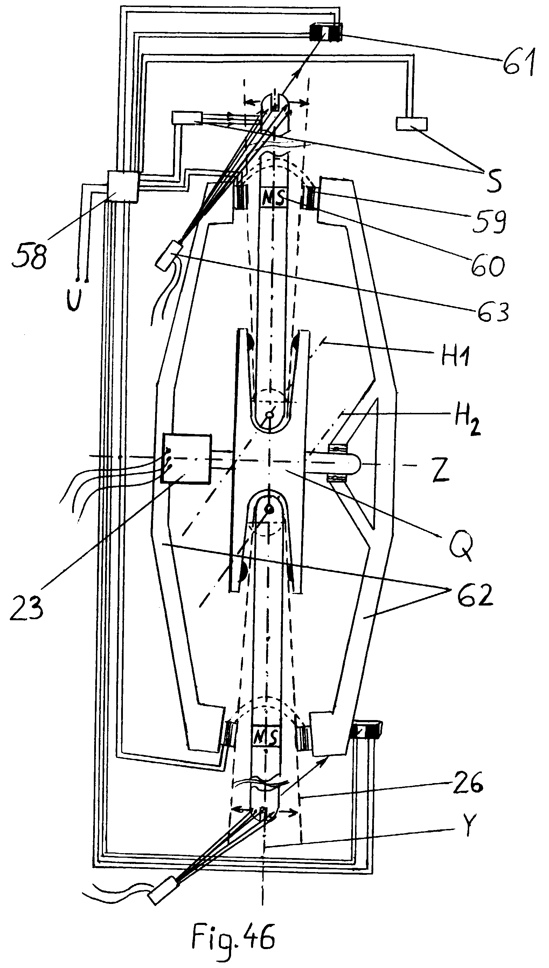

Bei der Variante, die in Fig.46 dargestellt ist, wird die Dämpfung der Schwingungen komplett von dem Stator 62 durchgeführt. Der Rotor Q benötigt in diesem Fall keine elektrische Energie. Die Steuerung der elektromagnetischen Spulen 59, welche die Schwingungen dadurch dämpfen, dass die magnetische Polarität geändert wird, je nach der Schwingungs-Phase, wird durch die Steuereinheit 58 und die Spezial-Sensoren 61(und Laserlichtstrahler 63)durchgeführt. Die Dauermagneten 60 sind im Rotor Q fest montiert.

Eine interessante Variante ist auf die Fig.43 und 44 dargestellt. Hier, die Erkennung der bestimmten Masse, die von dem rechtwinkligen Plan V zu der Achse Z abweicht, kann mit Hilfe von mehreren Laserlicht-Schranken 39, 40, 41, die in verschiedenen Farben Licht ausstrahlen. Dadurch würde die Abweichung jeder Masse einzeln entdekt, vorausgesetzt, sie sind mit einem Fenster 51 (und Spiegel) ausgestatet, die eine bestimmte Farbe haben. Die Erkennung kann auch mittels Polarisierten Licht (Fig. 44) oder ähnliche Methoden erfolgen. Die Sensoren G und S sind im Rotor Q (bzw. in der Zentralen Scheibe 32 ) eingebaut, sowie die elektromagnetischen Spulen 38a und elektronischen Bauelemente 43, welche die elektrische Energie speichern und steuern. Die Dämpfung der Schwingungen übermitteln dem Fahrzeug eine Kraft, die das Umkippen des Fahrzeugs verhindert (bzw. ausschliesst). Die Dämpfung der Schwingungen kann auch mechanisch mit Hilfe von mechanische Einrichtungen 44 oder Permanentmagneten, ohne elektronische Steuerung, durchgeführt werden (Fig. 35).

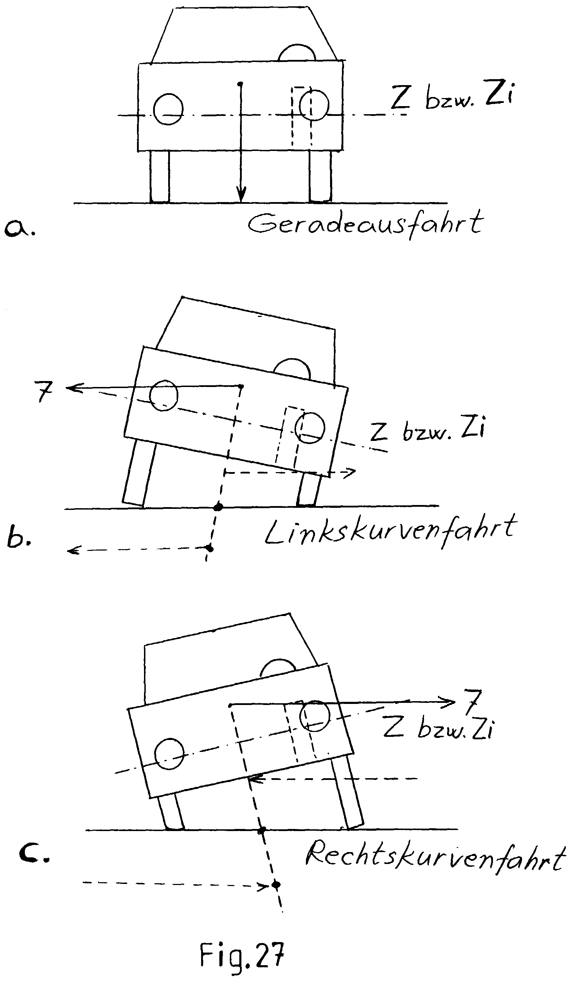

Bei überhöhter Leistung der Antikippkraftgeneratoren, verhalten sich die Fahrzeuge, in denen sie eingebaut sind, bei Ausweichmanövern oder Kurvenfahrten sehr ungewöhnlich. Etwa so, als wenn die Schwerpunkte der Fahrzeuge tiefer als die Fahrbahnebene liegen würden (Fig. 27).

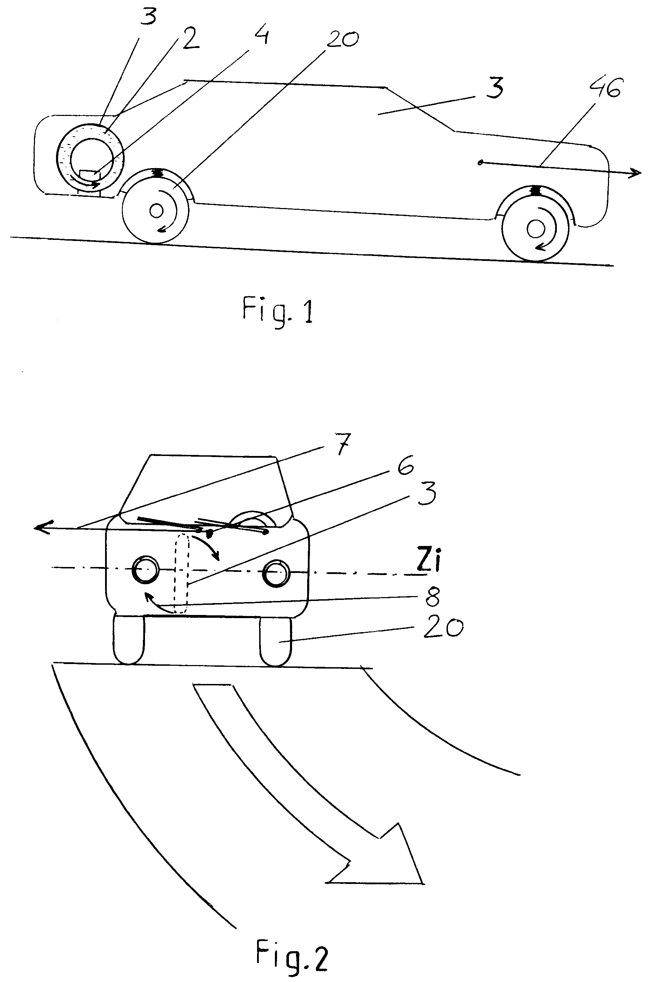

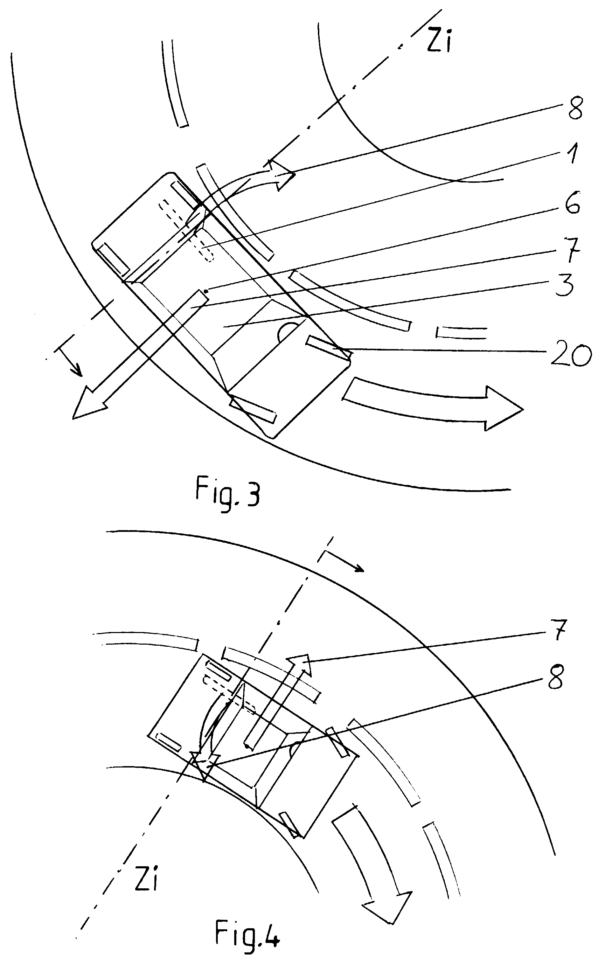

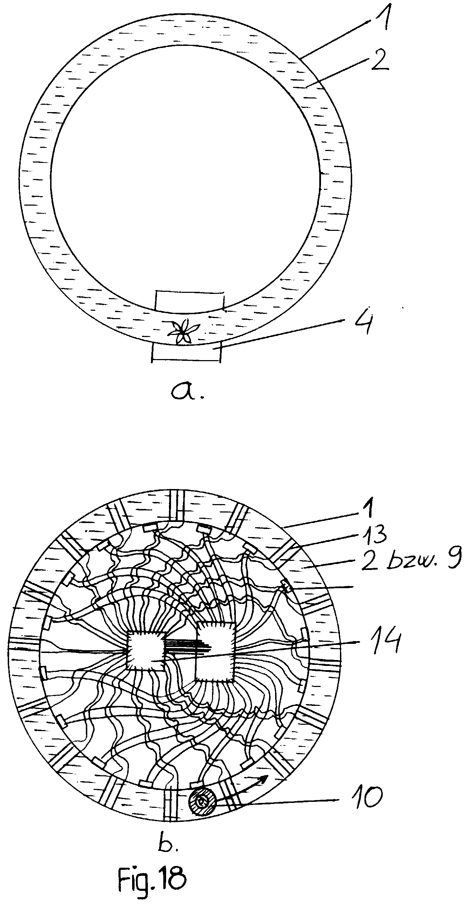

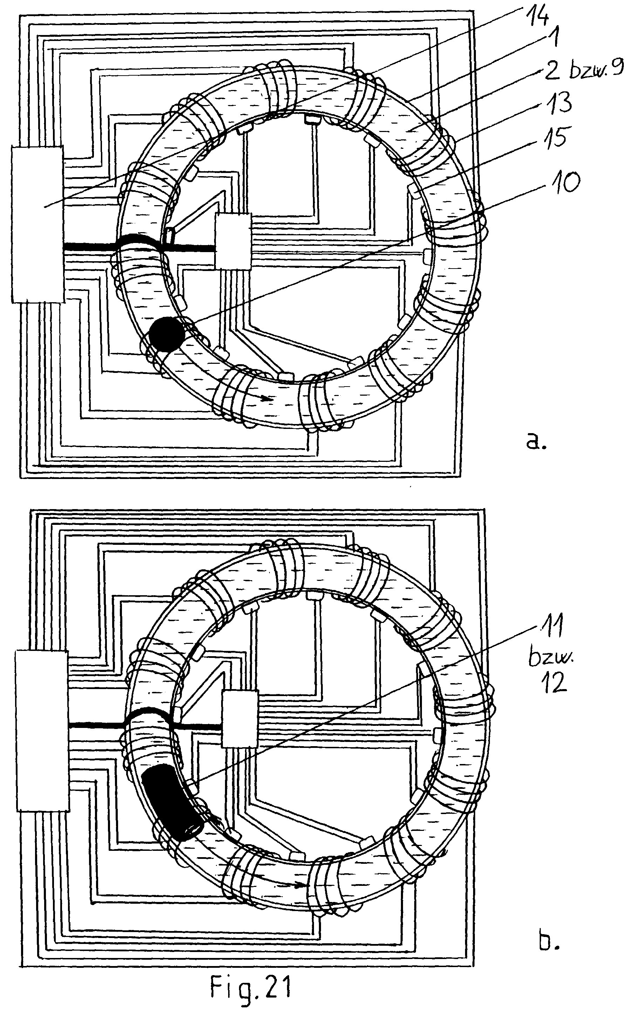

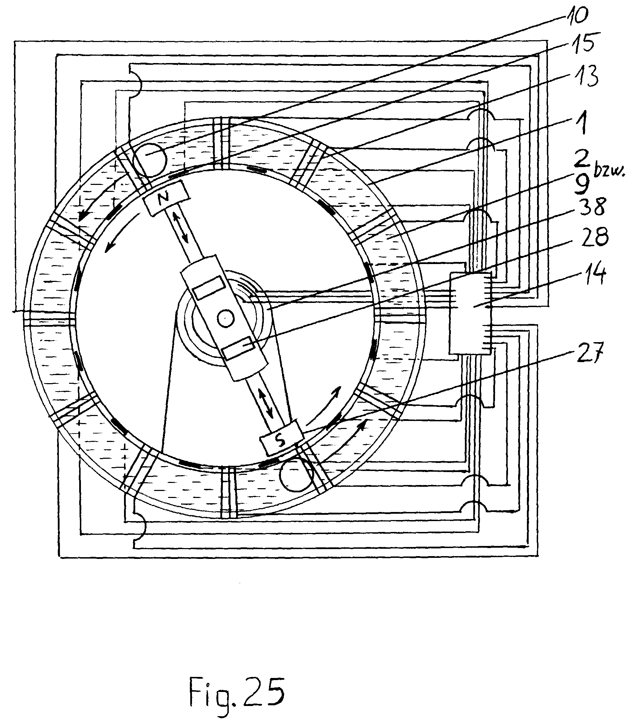

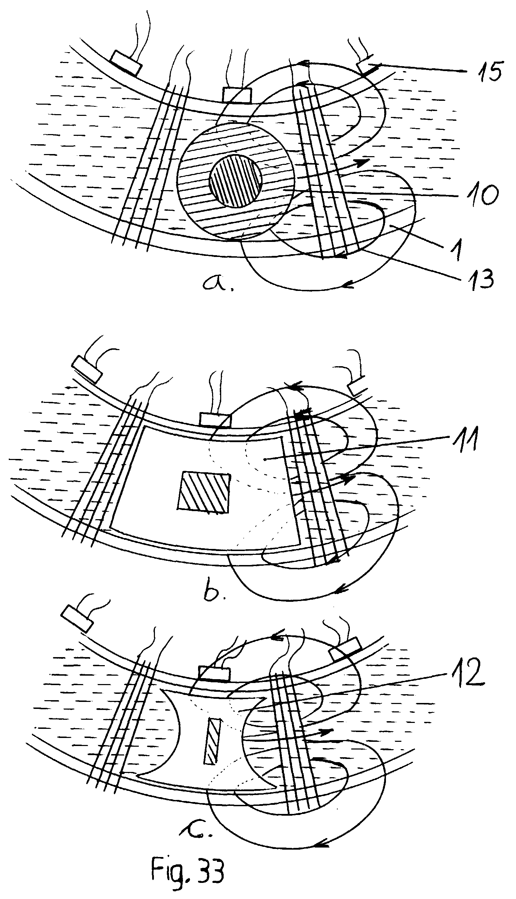

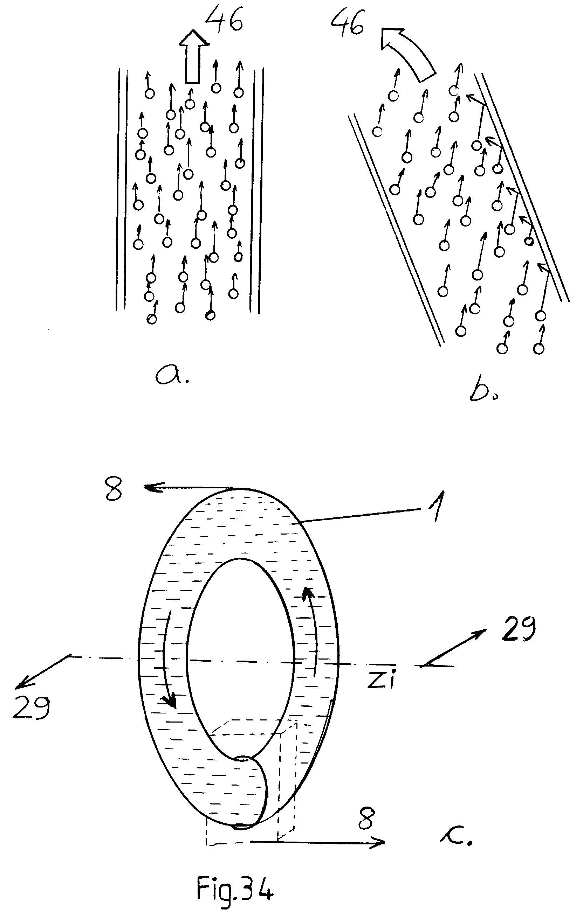

Eine andere Variante besteht aus mindestens einem geschlossenen, ringförmigen Rohr 1, dass mit Flüssigkeit gefüllt ist und dass senkrecht so in das Fahrzeug eingebaut ist, dass die imaginäre Achse Zi quer zur Fahrtrichtung (bzw. Fahrzeug) liegt. In dieser fliesst die Flüssigkeit durch eine Elektropumpe 4 sehr schnell um die imaginäre Achse Zi (Fig.1). Dieses Rohr hat die Form eines Ringes (oder oval 1a, oder auch Modifiziert 1b) mit verschiedenen Durchmessern und Querschnitten, je nach Bedarf. Je grösser die Vorrichtung ist und je schneller die Flüssigkeit im geschlossenen Kreis um die imaginäre Achse Zi fliesst, desto höher ist die Wirkungsleistung (bzw. die Antikippkraft). Die Flüssigkeitsmoleküle müssen in Gegenrichtung zum Uhrzeigersinn um die Achse Zi schnell fliessen (von der rechten Seite des Fahrzeugs beobachtet, Fig.1). Das Rohr ist an der Vorrichtung (bzw. Karosserie) befestigt. Schnell fliessende Flüssigkeit im kreisförmigen Rohr wirkt Kräften 29 welche die imaginäre Achse Zi auslenken wollen, rechtwinklig entgegen. Bei jede auslenkung der Achse Zi während die Flüssigkeitsmoleküle schnell fliessen, stossen sie mit der Rohrwände zusammen, da die Fliessrichtung geändert worden ist. Die Kinetische Energie der schnell fliessende Moleküle erzeugt eine Kraft die dem Vorrichtung und damit auch dem Fahrzeug übermittelt wird (Fig.34). Diese Kraft wird als Antikippkraft 8 eingesetzt,und sie wirkt nur solange das Fahrzeug Kurvenfährt oder Ausweichmanöver absolviert. Wenn das Fahrzeug vorwärts und z.b. in eine Linkskurve einfährt, dann wirkt eine nach links kippende Kraft aus dem Antikippkraftgenerator ein, die auf das Fahrzeug übertragen wird. Die im Schwerpunkt des Fahrzeugs angreifende Zentrifugalkraft 7 versucht das Fahrzeug nach rechts in Fahrtrichtung umzukippen. Wir haben zwei verschiedene Kräfte, die sich praktisch bis zu einer bestimmten Grenze entgegenwirken: Die Zentrifugalkraft 7 die das Fahrzeug nach rechts zu kippen versucht, und die Kraft der ausgelenkter imaginäre Achse Zi, die das Fahrzeug nach links zu kippen versucht (Fig.2 und 3). Die zwei Kräfte neutralisieren sie sich fast (bis zu eine bestimmte Grenze), sodass sich das Fahrzeug wie beim Geradeausfahrten verhält. Wenn das Fahrzeug eine Rechtskurve fährt, dann ändert sich die Richtung der Antikippkraft 8 des Generators, weil die imaginäre Achse Zi in diesem Fall in andere Richtung ausgelenkt worden ist (Fig.4). Eine variante geht davon aus, dass die ring-oder ovalförmigen Röhren mit Quecksilber 9 (oder andere schwere Flüssigkeit) gefüllt sind. Das Quecksilber (oder die andere Flüssigkeit) wird zum fliessen gebracht durch eine ferromagnetische Kugel 10 (oder genau wie das Rohr gebogene. Zylindrische Einheit 11, 12), die so konstruiert ist, dass ihre Masse pro Volumen genau der Dichte des Quecksilbers (bzw. anderer Flüssigkeit ) entspricht (Fig.18b,21,33). Der Durchmesser der Kugel (bzw. der Zylindrischen Einheit) ist kleiner, oder fast wie der Innendurchmesser des Rohres. Diese wird in Kreisbewegung gesetzt (dadurch auch das Quecksilber bzw. die andere Flüssigkeit) durch eine vielzahl von Elektromagnetischen Spulen 13 die ausserhalb-oder in das Rohr 1 integriert sind (Fig.18b, 21). Die Beschleunigung der Kugel 10 (bzw. der Zylindrischen Einheit 11, 12)wird durch einen elektronischen Generator 14, der die Spulen 13 nach der Reihe eine nach der anderen, in eine bestimmte Richtung ein-und auschaltet (Rotierendes Magnetfeld).
Die Position der Kugel (bzw. Zylindrischen Einheit) wird durch die Induktivitäts-Sensoren 15 jederzeit genau bestimmt werden. Das macht eine sehr effektive Beschleunigung des Quecksilbers 9 (bzw. anderen Flüssigkeit) möglich. Das Rohr, in dem das Quecksilber (bzw.andere Flüssigkeit) sich befindet, sollte aus nicht-ferromagnetischen Material hergestellt werden (oder teilweise).
In einer Variante, die in Fig.25 dargestellt ist, sind in das Rohr 1 zwei oder mehrere ferromagnetische Kugeln 10 (oder Zylindrische Einheiten 11, 12) angebracht, die im geschlossenen Kreis in einem konstanten Abstand zueinander im Rohr durch den elektromagnetischen Antrieb und synchrone Steuerung der elektromagnetischen Spulen 13 mittels eines elektronischen Generators 14 sich schnell bewegen, und somit die Flüssigkeit 2 (bzw. das Quecksilber 9) zum Fliessen bringen. Während der Antikippkraftgenerator langsam zum Stillstand zurückkehrt bzw. ausgeschaltet wird, werden die Dauermagneten 27 die Kugeln (bzw. Zylindrische Einheiten) in Abstand zueinander halten, sodass in einem Rotor 28 der sich im Inneren Plan befindet und sich um die Achse Zi drehen kann, schnell zu drehen anfängt, erreicht die Winkelgeschwindigkeit der Kugeln (bzw. Zylindrischen Einheit) und dann fahren die Dauermagneten 27 zentrifugal von der Achse Zi ab, bis zu einer Distanz, die ausreichend ist, um die Kugeln (bzw. Zylindrische Einheiten) im Magnetfeld abzufangen, beschleunigt sich negativ bis zum Nullwert (Stillstand). Das gleiche wird beim Start praktiziert, nun in umgekehrter Reichenfolge und positiver Beschleunigung.

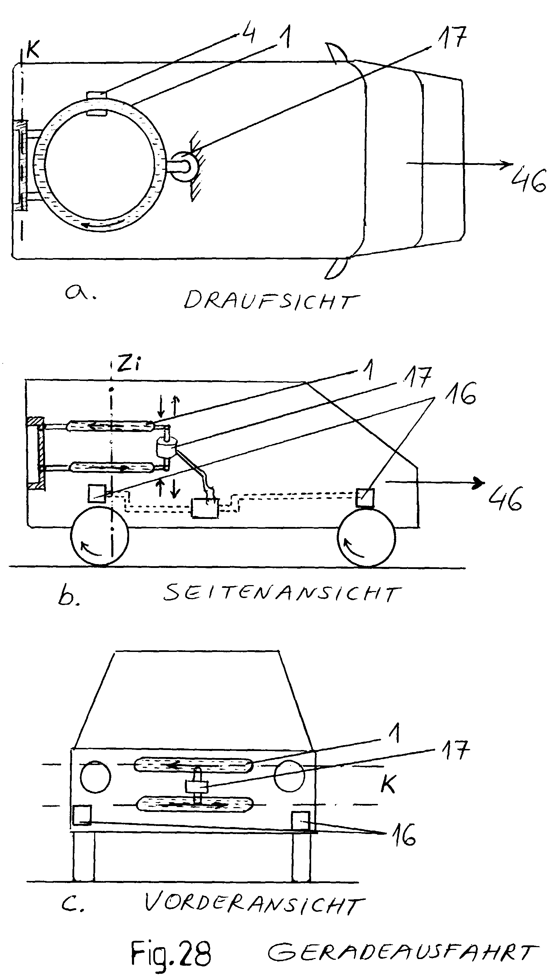

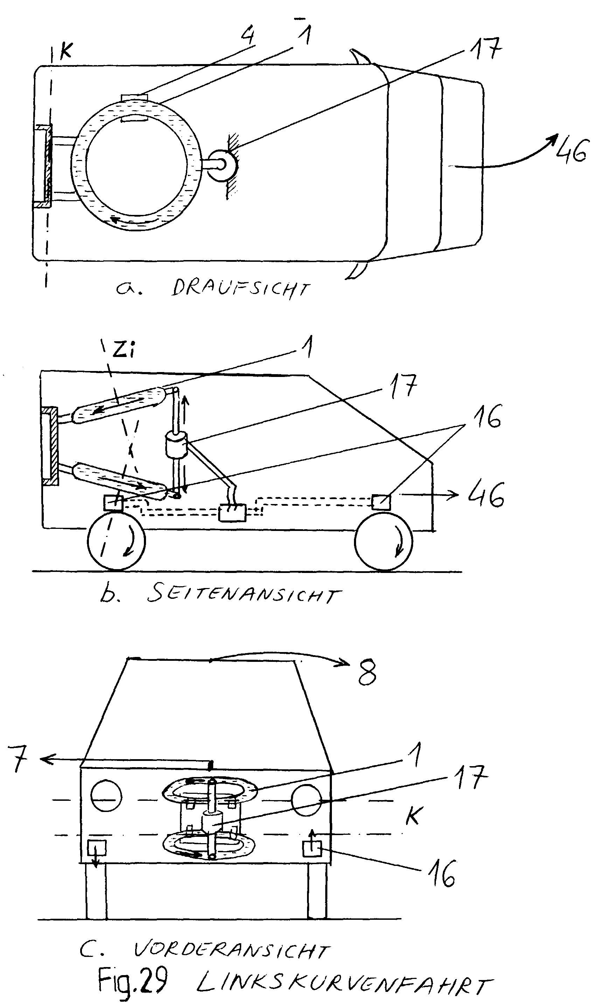

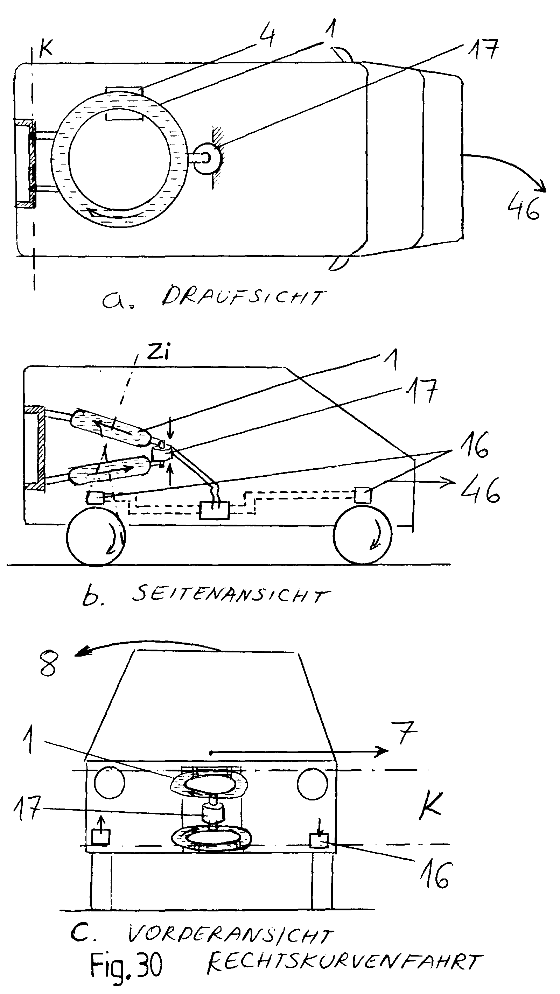

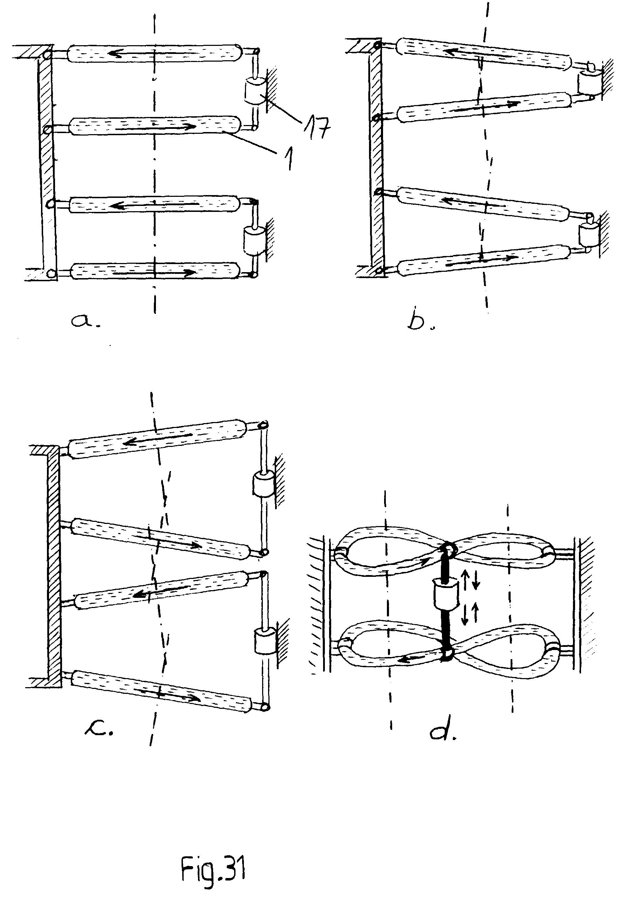

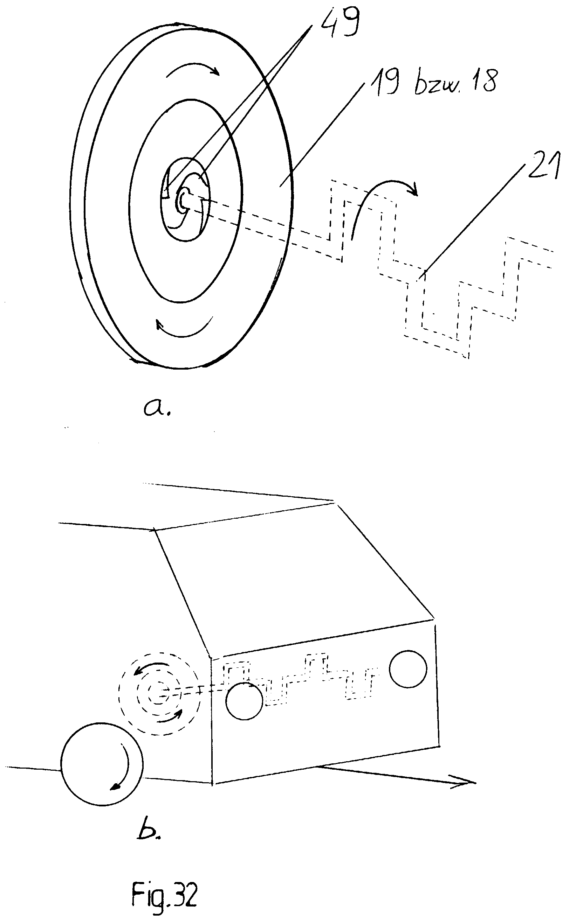

Die Variante die in Fig.28, 29, 30, 31 (Anspruch 7) dargestellt ist verhindert das Umkippen eines Fahrzeugs dadurch, dass mehrere Rohre (am besten paarweise) mit Flüssigkeit die schnell im geschlossenen Kreis fliesst, gefüllt sind. In diesem Modifikation, die Rohre sind waagerecht zum Fahrzeug, übereinander oder nebeneinander in der Vorrichtung angeordnet (Fig.28, 29, 30, 31). Die Flüssigkeitsfliessrichtung ist in jedem Rohr verschieden, und zwar fliesst die Hälfte in eine Richtung und die andere Hälfte in eine andere Richtung (Fig.31). Die ring-oder ovalförmigen Rohre sind um die quer zum Fahrzeug liegenden Achsen K (Fig.28, 29, 30) begrenzt drehbar. Je nach Kippneigung des Fahrzeugs, die mittels eines Sensors 16 registriert wird, werden die Rohre um die Achsen der Reihe K begrenzt gedreht.
Alle Rohre, in welche die Flüssigkeit in gleicher Richtung fliesst, werden in gleiche Richtung um die Achsen der Reihe K (K1, K3, K5,...,K2, K4, K6,...) durch Elektroantrieb 17 (oder anderen Antrieb), gedreht (Fig.31). Die Antikippkraft wirkt nur solange die Antriebskraft die Rohre um die Achsen der Reihe K dreht. Deswegen muss das Antikippkraft-Potential während das Fahrzeug geradeausfährt, aufgeladen werden.

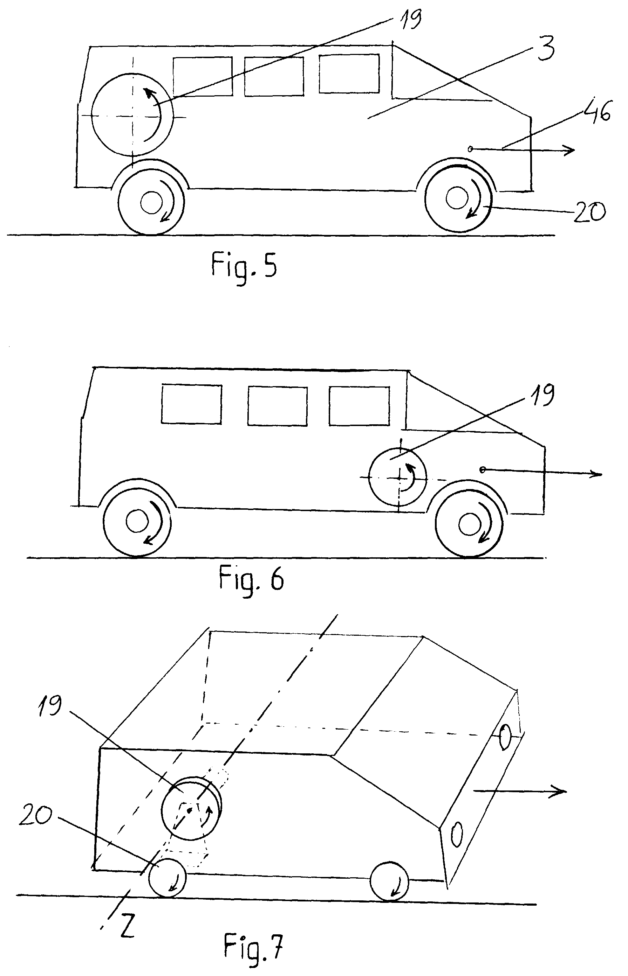

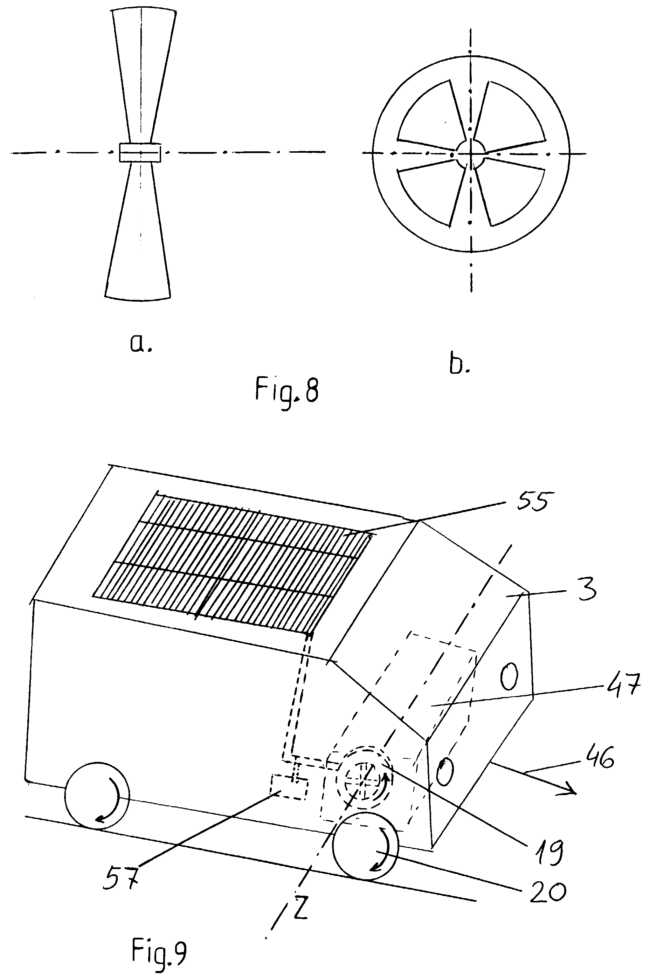

Die Antikippkraft kann auch mit einem (oder mehreren) massiven Ring 18 oder Schwungscheibe 19, die gelagert ist und sehr schnell rotiert, erzeugt werden (Fig.5, 6, und 7). Die Drehrichtung muss immer die Gegendrehrichtung der Räder 20 von Fahrzeug sein. Die Achse Z der Schwungscheibe (oder Ring) ist quer und waagerecht zum Fahrzeug (Fig.7). Im Verhältnis zum Fahrzeug ist die Richtung der Achse Z festgelegt und nicht zu ändern (derselbe gilt für die Achse Zi auch). Der massive Ring oder Schwungscheibe soll in einem vakuumierten, hermetisch geschlossenen Gehäuse angebracht sein, um die Energie, die verloren gehen würde durch den Luftwiderstand, zu reduzieren. Die ideale Form der Schwungscheibe (oder Ring) wäre mit Hauptmasse in der Peripherie (Fig.8a,b). Die Schwungscheibe oder massiver Ring könnten bei Frontangetriebenen Fahrzeugen direkt an die Motorkurbelwelle 21 (vorausgesetzt ihre Achse quer zum Fahrzeug eingebaut ist und sie dreht sich im Uhrzeigersinn, von der linken Seite des Fahrzeugs beobachtet - ein "Linksdrehender Motor" 47) angebracht, oder per Transmission (beim "Rechtsdrehender Motoren" 48) angetrieben werden (Fig.9).

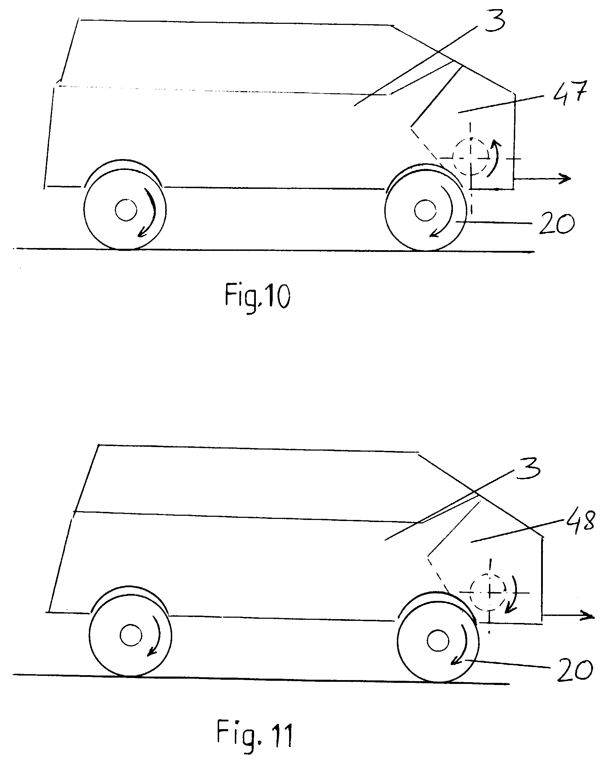

Alleine die Motorkurbelwelle 21 könnte als Antikippkraft Quelle betrachtet werden, wenn sie Massiv ist, ihre Achse quer zum Fahrzeug liegt, und sie sich im Vergleich zu den Rädern 20 des Fahrzeugs während Vorwärtsfahrt in Gegenrichtung dreht (Fig.10).

Eine andere Lösung geht davon aus, dass die Kurbelwelle des quer ligenden Motors bei Fahrzeugen mit Frontantrieb, mit einem schweren Ring oder Schwungscheibe ausgestattet ist, und sie sich im Uhrzeigersinn von der linken Seite aus gesehen dreht ("Linksdrehender Motor").

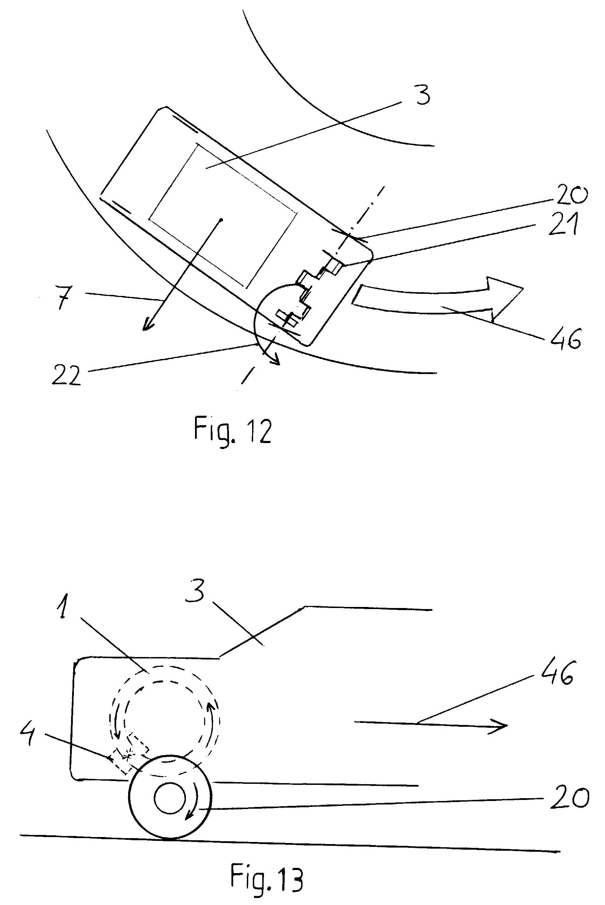

Ein frontangetriebenes Fahrzeug mit einer quer eingebauten Motorkurbelwelle, die sich im Uhrzeigersinn (von der rechten Seite aus gesehen) dreht ("Rechtsdrehender Motor"), beeinflusst negativ das stabile Verhalten des Fahrzeugs beim Ausweichmanöver oder bei Kurvenfahrt (Fig.11). In solchen Fällen erzeugt die Kurbelwelle eine Kraft, die das Fahrzeug nach der Aussenseite der Kurve zu kippen versucht.
Diese Kraft addiert sich mit dem Kippmoment der Zentrifugalkraft und erleichtert das Unkippen von Fahrzeugen (Fig.12). Die Wirkung der Kippkraft der Motorkurbelwelle des "Rechtsdrehender Motors" ist umso höher, je höher die Drehzahl des Motors zur Zeit der Kurvenfahrt oder des Ausweichmanövers ist.
Das erklärt auch, warum manche Fahrzeuge sich stabiler beim Ausweichmanöver mit etwas höherer Geschwindigkeit (z.b. 75km/h) verhalten, als bei niedriger Geschwindigkeit (z.b. 65km/h). Es ist denkbar, dass in unserem Beispiel das Fahrzeug eine höhere Motordrehzahl bei Tempo 65km/h hatte, als mit 75km/h, weil in diesem Fall einen gang höher geschaltet wurde (bei 75km/h).
Natürlich leisten hier auch andere Kräfte ihren Beitrag, z.b. die sogenannten Eigenfrequenzen, die sich aus der Konstruktion des Fahrzeugs ableiten.

Vorteile der Erfindung sind, dass die Fahrzeuge in denen eine Variante (oder mehrere gleichzeitig) von Antikippkraftgeneratoren, eingebaut wird, vollkommen sicher Ausweichmanöver absolvieren können, und damit ein Gefühl der Sicherheit den Insassen vermitteln.
Es handelt sich hierbei um eine Kombination von mehreren technischen Systemen.

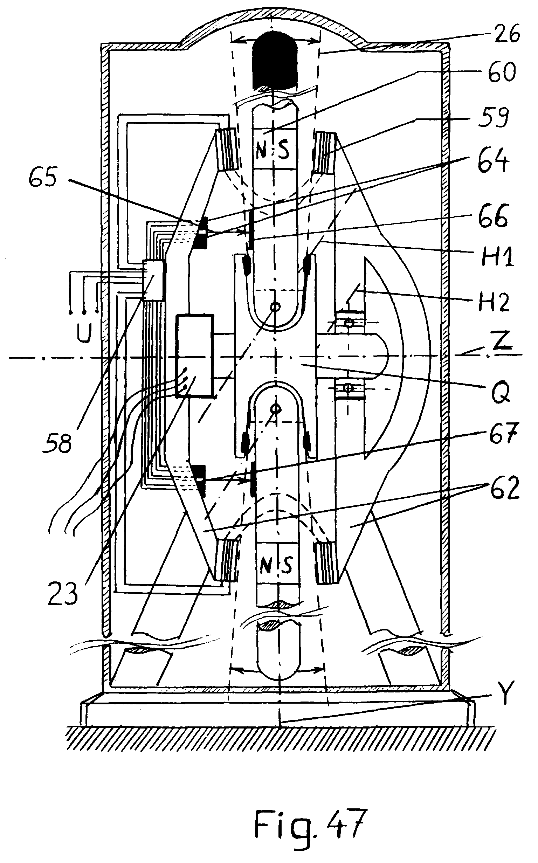

In Fig.13 ist die Fliessrichtung im geschlossenen, ringförmigen Rohr dargestellt.

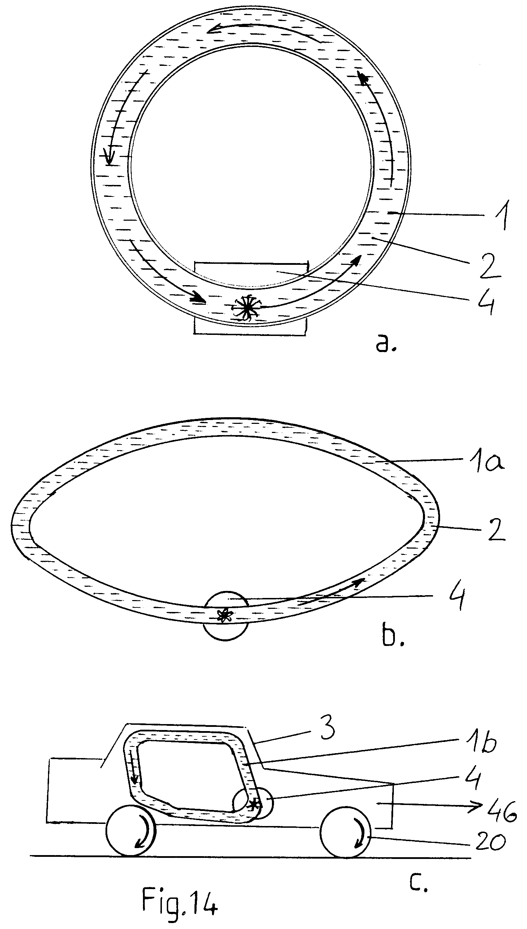

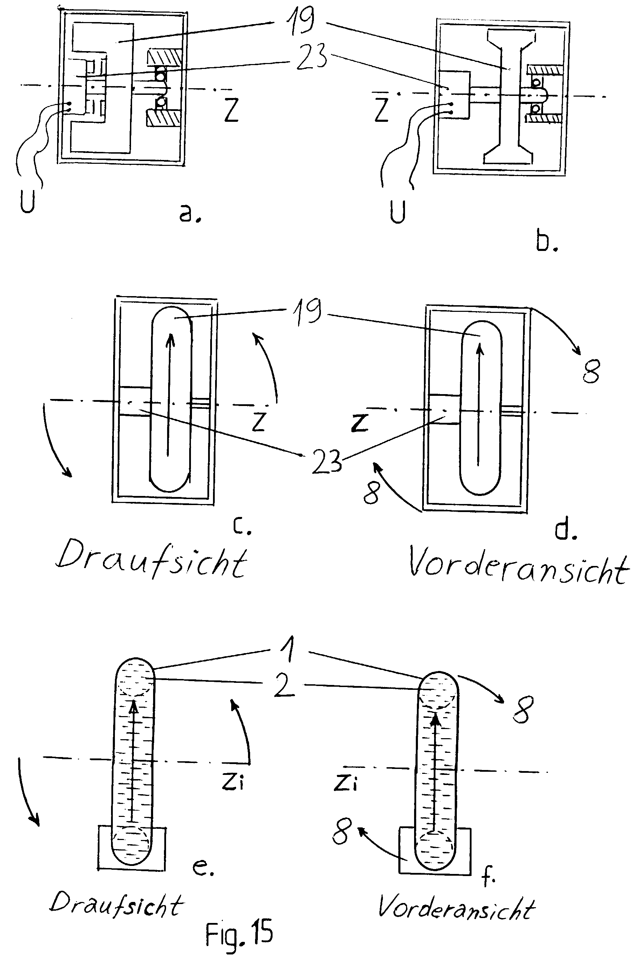

Fig.14 a,b,c zeigt, wie diese Vorrichtung in verschiedenen Varianten aussehen kann. Die Fig.15 a,b,c,d,e,f zeigt wie der Antikippkraftgenerator in eine Variante eingebaut werden kann und welche Kräfte sie erzeugen kann.

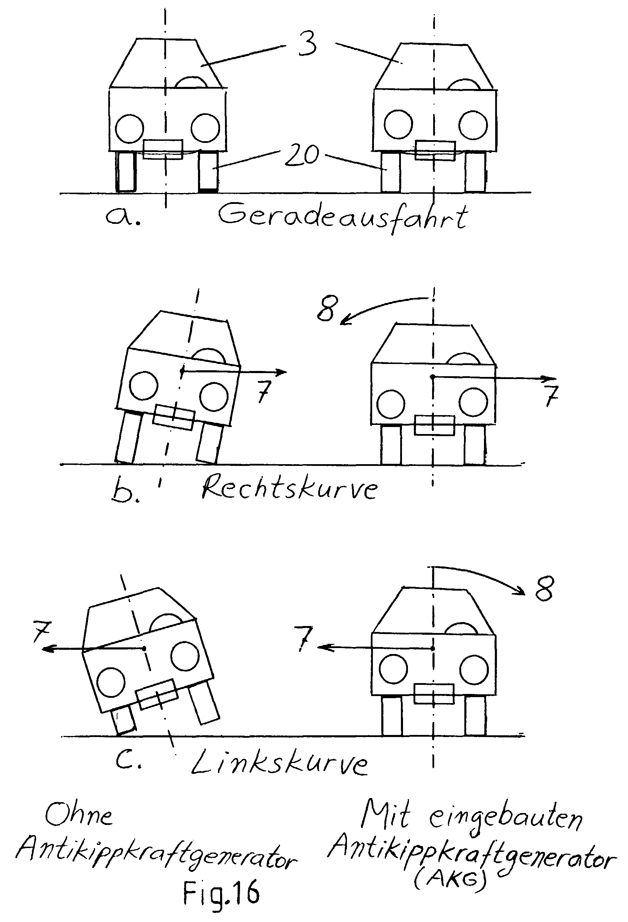

In Fig.16a,b,c wird dargestellt wie das Fahrzeug sich in der Kurve verhält (mit und ohne Antikippkraftgenerator.

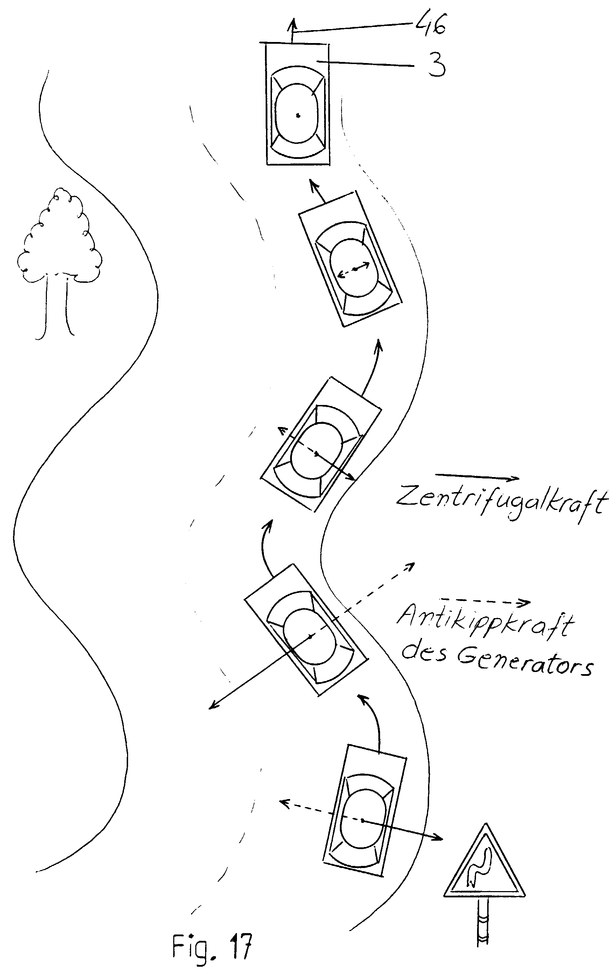

In Fig.17 wird schematisch das Verhalten des Fahrzeugs mit Antikippkraftgenerator in verschiedenen Fahrsituationen dargestellt.
In Fig.18a,b sind mögliche Varianten dargestellt.

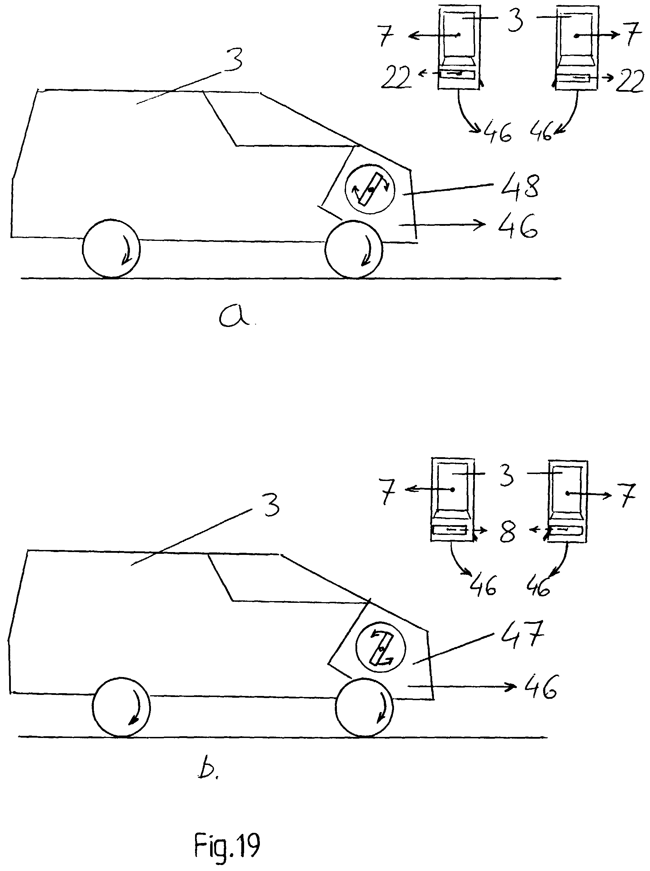

Fig.19a,b zeigt rechts-und links drehende Motorkurbelwellen bei Fahrzeugen mit Frontantrieb und die Nebeneffekte der Kräfte, die in solchen Fällen von der Kurbelwelle erzeugt werden.

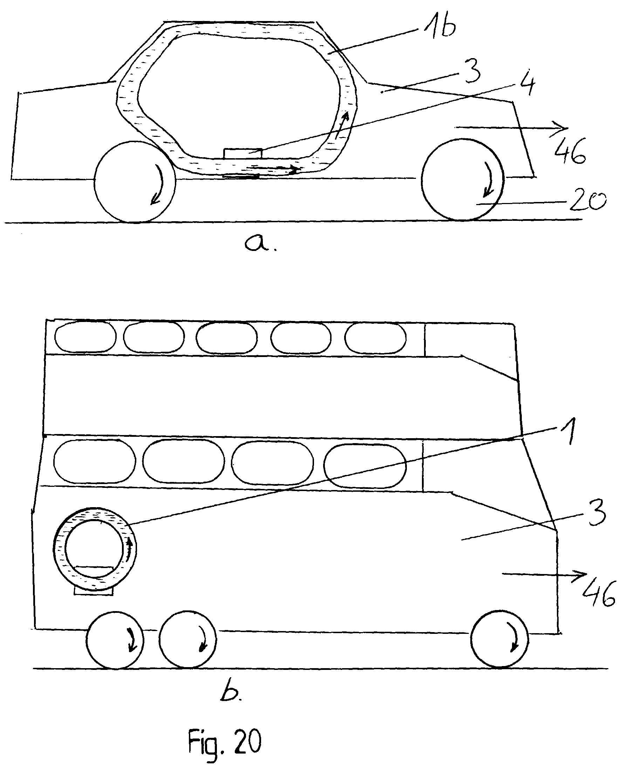

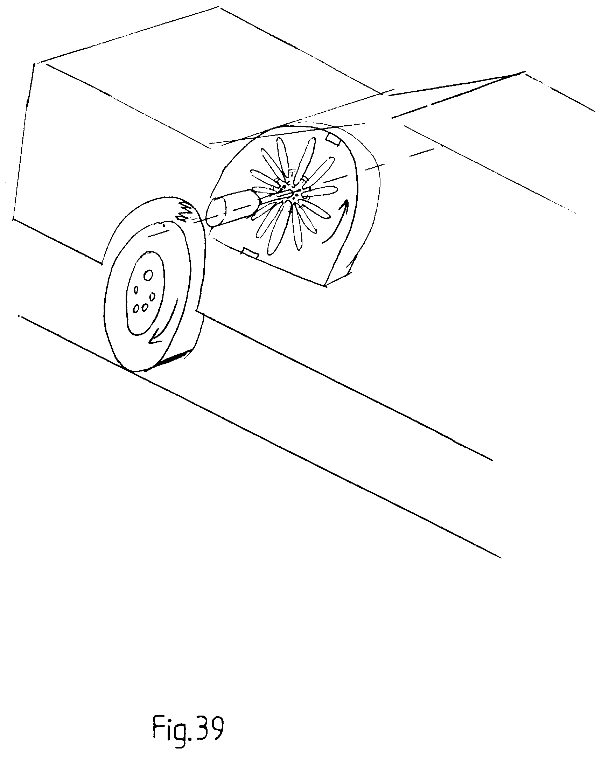

In Fig.20a,b, und 39 sind Beispiele für die in der Karosserie untergebrachten Antikippkraftgeneratoren abgebildet.

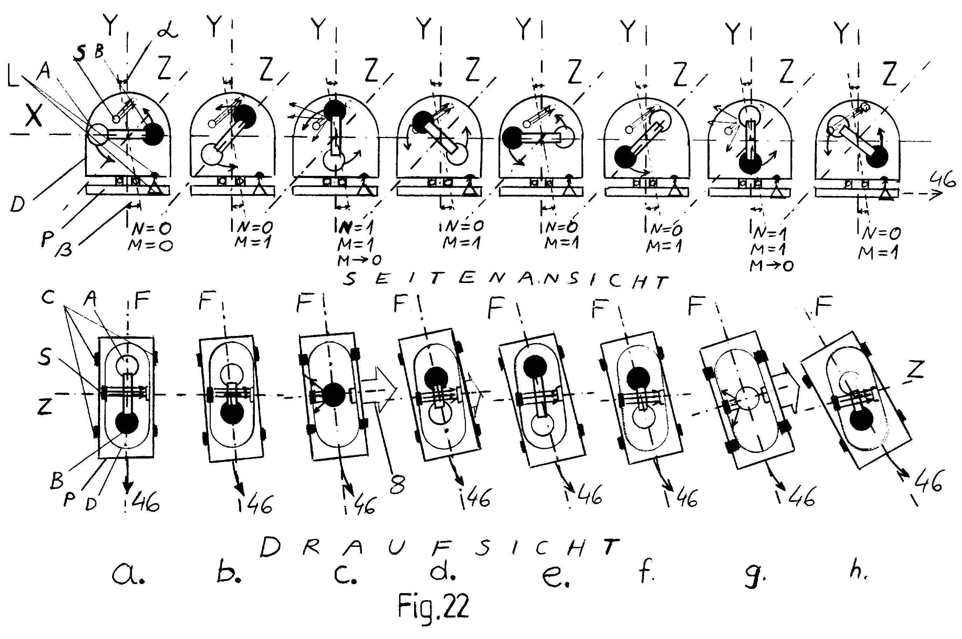

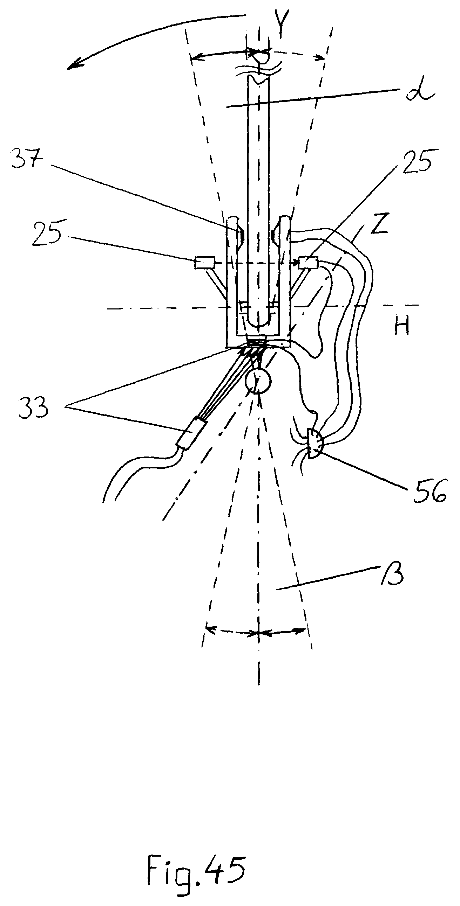

In Fig. 21,35,36,37,38,39,40,41,42,43,44,45,46, sind einige von vielen möglichen Varianten und Modifikationen dargestellt, sowie in Fig.22,23,24,28,29,30,31 die Kräfte die im Fahrzeug und Antikippkraftgenerator bei Kurvenfahrt wirken.
Eine Variante ist in Fig.47 dargestellt. Bei dieser Variante werden vier Sensoren 64 benötigt um die Schwingungen zu entdecken (Fig.47). Die Sensoren werden mit Hilfe von Laserstrahlen 65 und Spiegeln 66 gesteuert. Die Spiegel sind im Rotor Q eingebaut.
Die Sensoren 64, Laserlichtstrahler 67 und Dämpfungseinheiten 59 sind im Stator 62 eingebaut.
Die Signale werden von Sensoren 64 weiter zur Steuereinheit 58 geleitet, welche die notwendige Massnahmen ergreift, um die Schwingungen zu dämpfen.

Die Erfindung besteht aus mehreren Geräten, die einander unterstützen, und somit ein neues Sicherheitskonzept für die Fahrzeugindustrie darstellen. Auch Fahrzeuge mit komfortbetonter Federung, mit langen Federwegen und weichen Querstabilisator , die ein bequemes Fahren ermöglichen, sowie schwere, einspurige und dreispurige Fahrzeuge, LKW-s, Anhänger aller art, Militärfahrzeuge, Rennfahrzeuge, Stuntfahrzeuge, Weltraumfähre, etc. können davon profitieren. Natürlich wird diese Erfindung mit vielen elektronischen Steuereinheiten ausgestattet sein inklusive einer Notbremse, welche die Wirkung des Antikippkraftgenerators im Notfall ausser Kraft setzt. Eine programmierbare elektronische Steuerung könnte so konzipiert werden, dass der Antikippkraftgenerator z.b. erst dann aktiviert wird wenn eine kritische Geschwindigkeit überschritten wird, wobei die Leistung des Antikippkraftgenerators der Fahrgeschwindigkeit automatisch angepasst wird. Die Fahrzeuge, in denen diese Antikippkraftgeneratoren eingebaut werden, sollen gute Reifenhaftung haben.
Das unterstützt die Wirkung des Antikippkraftgenerators.

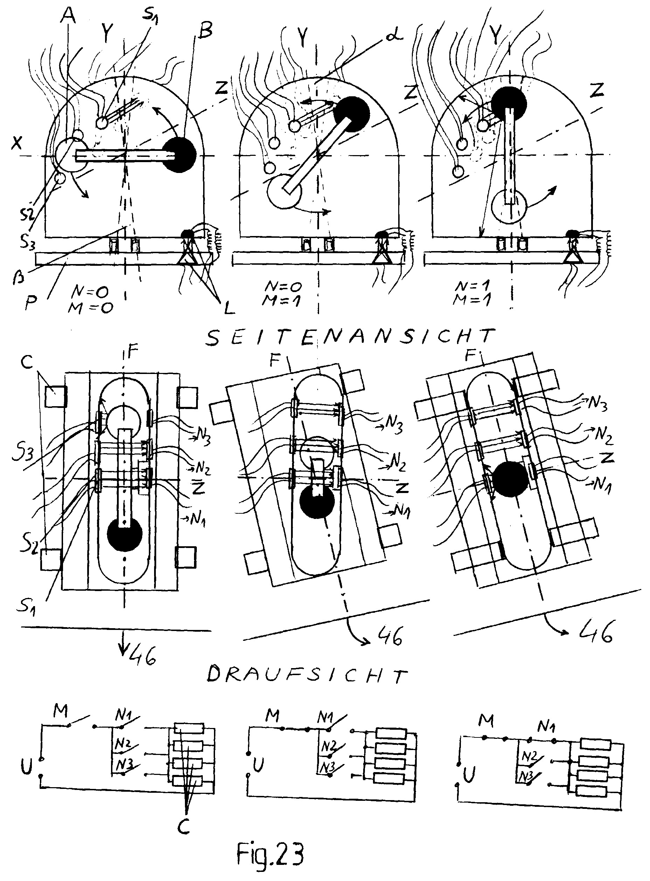

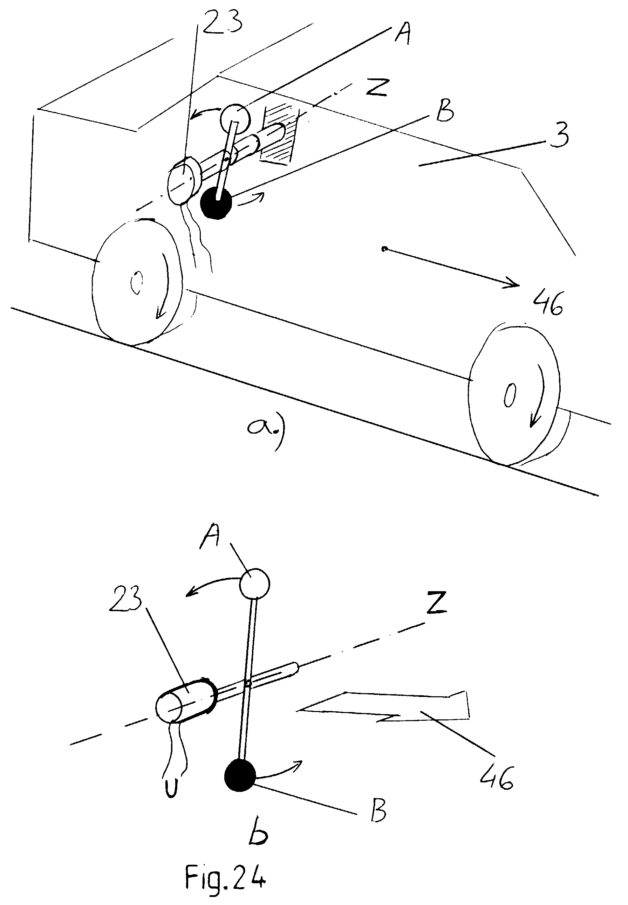

Eine interessante Variante von Antikippkraftgeneratoren, die das Umkippen eines Fahrzeugs während Kurvenfahrt und Ausweichmanöver verhindern, wird auf die Fig.22, 23 dargestellt (Anspruch 6).
Bei dieser Variante handelt es sich um zwei Massen (A und B), die sich mit hoher Geschwindigkeit um eine gelagerte Achse Z drehen. Hier spielt eine spezielle elektronische Steuerung eine wichtige Rolle. Der Antikippkraftgenerator besteht aus einem statischen Teil (Plattform P), der an die Karosserie des Fahrzeugs befestigt ist, und einen dynamischen Teil D, der sich um eine senkrechte Achse Y um einige Grad drehen kann. Die Massen A und B werden durch einen Motor oder Elektromotor in zirkulare Bewegung mit hoher Geschwindigkeit gesetzt. Diese drehen sich schnell um eine waagerecht und quer zum Fahrzeug liegenden Achse Z. Die Drehrichtung ist die gleiche, wie im Uhrzeigersinn von der linken Seite aus gesehen (Fig. 24). In die Gehäuse, worin die zwei Massen A und B sich befinden, ist eine Lichtschranke (oder IR, Laserlichtschranke o.ä.) eingebaut, die den Zeitpunkt, wann die Schwerpunkte der zwei Massen sich in einer senkrechten Achse Y befinden, registriert (Fig.22, 23). Wenn das Fahrzeug nach Links oder Rechts gelenkt wird, dann dreht sich die Plattform P auch mit. Weil die zwei Massen (A und B)sehr schnell kreisen, behält der dynamische Teil D, wegen gyroscopischer Eigenschaften den ursprunglichen Kurs bei. Die Sensoren L zeigen an, sobald eine Schwankung der Plattform im Verhältnis zum dynamischen Teil stattfindet. Also sobald die Richtung der Längsachse F der Plattform geändert wird, wird dies von den Sensoren L registriert.
Diese schliessen dann durch einen Stromkreis einen elektronischen Schalter M. Da der elektronische Schalter M in Reihe mit dem elektronischen Schalter N (von Sensoren S gesteuert ) verbunden ist, wird noch kein Signal an die Elemente C weitergeleitet. Schalter N schliesst nur dann, wenn die Schwerpunkte der Massen A und B sich in derselbe Linie befinden wie die Achse Y. In diesem Moment, der nur einige Bruchteile von Sekunde dauert, wird der Impuls für eine Kurskorrektur an die Elemente C weitergeleitet.
Bei den C handelt es sich um Piezoelemente (oder magnetostriktive , oder elektromagnetische Einheiten) die kräftig und schnell die Achse Z des dynamischen Teils rechtwinklig zu Achse F ausrichten. Deren Wirkung ist zeitlich eingeschränkt und dauert theoretisch nur solange ein Signal (Impuls) vorhanden ist (der Moment wenn die Schwerpunkte der Massen A und B sich auf die Achse Y befinden, bzw. Sektoren α und β). So ist es möglich z.b. bis zu mehrere Tausend Korrekturen pro Sekunde durchzuführen, ohne (oder sehr gering ) die Fahrtrichtung 46 des Fahrzeugs zu beeinflussen, aber es gegen Umkippen zu sichern. Auf den Fig. 22 und 23 ist das genau dargestellt. Der elektronische Schalter M bleibt geschlossen, solange die Achse Z nicht einen Winkel von 90° mit der Achse F der Plattform P bildet. In Gegensatz dazu wird der Elektronische Schalter N nur dann geschlossen, wenn die Massen A und B, die Lichtschranke (bzw. Sensoren S) unterbrechen. Wenn die Sensoren S sich in einem Kreis um die Achse Z bewegen, dann ändern sich die Eigenschaften des Antikippkraftgenerators. Damit ändert sich die Richtung der Kräfte sodass auch die Fahrtrichtung des Fahrzeugs beeinflusst werden kann. Diesen Eigenschaften sind keine Grenzen gesetzt. Ein solcher Antikippkraftgenerator mit computergesteuertem, drehbarem Sensor S oder mit mehreren solchen Sensoren in verschiedenen Winkeln des dynamischen Teils angebracht, die nach Bedarf und Fahrsituation einzeln aktiviert oder deaktiviert werden können, wäre in Fahrzeugen sowie in Raumfähren einsetzbar, da die Kräfte gezielt mit elektrischer Energie erzeugt werden können, ohne dabei Materialverluste in Kauf nehmen zu müssen, in Gegensatz zu Steuerdüsen, bei denen ein Gas schnell fliesst, letztendlich die Düse verlässt und im Weltraum verschwindet.

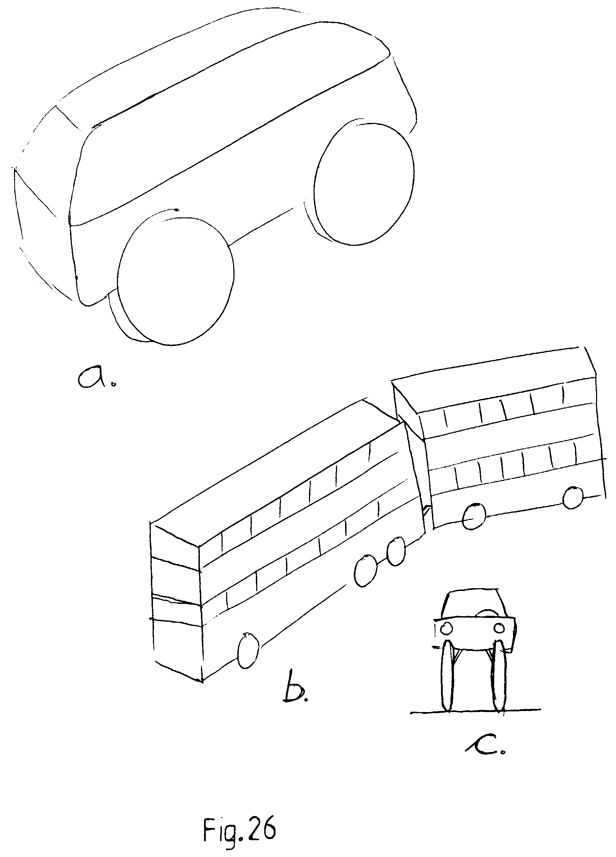

Diese Erfindung macht es möglich, in Zukunft Fahrzeuge herzustellen die einen hohen Schwerpunkt haben (Fig.26). Natürlich könnte diese Erfindung auch im Luftverkehr (z.b. Hubschrauber ) und Wasserverkehr, eingesetzt werden. Der Antikippkraftgenerator könnte auch mit ESP und ABS kombiniert in Fahrzeuge eingesetzt werden.

Letztendlich, Vorteile der Erfindung sind, dass die Fahrzeuge in denen eine Variante, der bisher beschriebenen Antikippkraftgeneratoren ( oder modifizierte Versionen ), eingebaut wird, vollkommen sicher Ausweichmanöver absolvieren können, und damit ein Gefühl der Sicherheit den Insassen vermitteln.

## Patentansprüche

1. Antikippkraftgenerator (AKG), der das Umkippen eines Fahrzeugs während Kurvenfahrt oder Ausweichmanöver verhindert, dadurch gekennzeichnet, dass mehrere schnell um eine gelagerte, quer und waagerecht zum Fahrzeug liegende Achse Z, rotierende Massen (A,B,C,...) die Antikippkraft erzeugen, sodass die Drehrichtung der Massen (A,B,C,...) um die Achse Z die Gegenrichtung im Verhältnis zu den Drehrichtung der Räder (20) des Fahrzeugs, während der Fahrt ist, wobei die Achse Z den Schwerpunkt der rotierenden Massen enthält, und jede einzelne schnell rotierende Masse um eine eigene Achse der Reihe H (H1,H2,...), die tangential zu einem Kreis, dessen Plan rechtwinklig zu der Achse Z ist und dessen Zentrum die Achse Z enthält, angeordnet sind, in einem begrenzten Winkel (26) drehbar ist, mit einen elektronischen System ausgestattet ist, dass die entstehenden Schwingungen (während das Fahrzeug Ausweichmanöver absolviert oder Kurven fährt) der Massen (A,B,C,...) um die Achsen der Reihe H mit einer Frequenz, welche der Umdrehungen pro Sekunde der Massen um die Achse Z entspricht, gezielt und für jede Masse einzeln in eine bestimmte Richtung dämpft und das nur, wenn der Schwerpunkt jeder Masse in einem engen Sektor (α ,β) (bzw. Phase) der eine senkrechte Achse Y zu der Achse Z enthält, sich befindet (Fig.35,36,37,38, 39,41,42,46,47). Im Verhältnis zum Fahrzeug ist die Richtung der gelagerte Achse Z festgelegt und nicht zu ändern.

2. Antikippkraftgenerator nach Anspruch 1, dadurch gekennzeichnet, dass die elektronische Steuerung, die Schwingungen jeder einzelnen Masse um die Achsen der Reihe H, dämpft, wenn der Wert Null der Potentialen Energie am ende einer Halbperiode erreicht wird, egal wo sich die Masse (A oder B oder C,...) während dem Rotieren befindet (Fig.45).

3. Antikippkraftgenerator nach den Ansprüchen 1 und 2, dadurch gekennzeichnet, dass für in dem Rotor Q eingebauten Elemente die notwendige elektrische Energie mit Hilfe von elektromagnetischen Spulen (38, 38a) von aussen, berührungslos durch elektromagnetische Induktion übertragen wird wobei die Erkennung der bestimmten rotierenden Masse (A oder B oder C,...), die von dem rechtwinkligen Plan zu der Achse Z abweicht, mit Hilfe von mehreren Laserlicht-Schranken, die in verschiedenen Farben (bzw. codierte Signale) Licht ausstrahlen (Fig.43), oder (und) mittels Polarisierten Licht (Fig.44) erfolgen wird.

4. Antikippkraftgenerator, der das Umkippen eines Fahrzeugs während Kurvenfahrt oder bei Ausweichmanöver verhindert, dadurch gekennzeichnet, dass ein statisches ring-oder ovalförmiges Rohr (1), gefüllt mit einer, durch eine Pumpe (4) angetriebene, schnell fliessende Flüssigkeit (2), vorhanden ist, die Antikippkräfte erzeugt, so dass die Flüssigkeit im ring-oder ovalförmigen,geschlossenen Rohr (die fest eingebaut ist) um eine imaginäre Achse Zi, die quer und waagerecht zum Fahrzeug liegt, fliesst, wobei die Fliessrichtung der Flüssigkeitsmoleküle die Gegenrichtung im Verhältnis zu den Drehrichtung der Räder (20) des Fahrzeugs, während der Fahrt ist. Im Verhältnis zum Fahrzeug ist die Richtung der Achse Zi festgelegt und nicht zu ändern (Fig.2; 13; 14; 15e,f; 18a).

5. Antikippkraftgenerator, der das Umkippen eines Fahrzeugs während Kurvenfahrt oder bei Ausweichmanöver verhindert, dadurch gekennzeichnet, dass er mindestens zwei Massen (A,B,...), die schnell um eine gelagerte Achse Z die quer und waagerecht zum Fahrzeug liegt, rotieren, enthält, wobei die Drehrichtung der Massen um die Achse Z die Gegenrichtung im Verhältnis zu den Drehrichtung der Räder des Fahrzeugs, während der Fahrt ist. Die Achse Z enthält den Schwerpunkt der Massen und die Richtung der Achse Z im Verhältnis zum Fahrzeug bleibt unverändert (Fig.24).

6. Antikippkraftgenerator, der das Umkippen eines Fahrzeugs während Kurvenfahrt oder bei Ausweichmanöver verhindert, dadurch gekennzeichnet, dass er zwei Massen (A und B), die schnell um eine gelagerte Achse Z die quer und waagerecht zum Fahrzeug liegt, rotieren, enthält, wobei die Drehrichtung der zwei Massen um die Achse Z die Gegenrichtung im Verhältnis zu den Drehrichtung der Räder (20) des Fahrzeugs, während der Fahrt ist, sowie die Achse Z den Schwerpunkt der Zwei Massen enthält und sie ist um eine senkrechte Achse Y in einem begrenzten Winkel drehbar. Die Achse Z bildet mit der Achse F (Fig.22,23) einen 90°-Winkel (während das Fahrzeug geradeaus fährt), und bei jeder Abweichung der Achse F von diesem Winkel, die Achse Z durch die sensorgesteuerten Elemente C (Piezo- oder magnetostriktiv-oder elektromagnetischer Antrieb ö.ä.) schrittweise rechtwinklig zu Achse F positioniert wird, sooft ein Befehl der Sensoren L mit Bestätigung der Sensoren S erteilt wird. Solange die beiden elektronischen Schalter M und N, oder einer davon, nicht geschlossen sind, ist die Achse Z um die Achse Y frei drehbar bis zu einer bestimmten Grenze (Fig.22, 23).

7. Antikippkraftgenerator, der das Umkippen eines Fahrzeugs verhindert, dadurch gekennzeichnet, dass mehrere ring-oder ovalförmige Rohre (am besten paarweise) mit Flüssigkeit die schnell im geschlossenen Kreis fliesst, gefüllt sind, wobei die Rohre waagerecht zum Fahrzeug, übereinander oder nebeneinander in der Vorrichtung angeordnet sind (Fig.28,29,30,31) und die Flüssigkeitsfliessrichtung in der Hälfte der Rohre,von oben aus gesehen, dem Uhrzeigersinn und in der anderen Hälfte der Rohre dem Gegenuhrzeigersinn entspricht. Die ring-oder ovalförmigen Rohre sind um die quer zum Fahrzeug liegenden Achse der Reihe K (Fig.28,29,30) begrenzt drehbar. Je nach Kippneigung des Fahrzeugs, die mittels eines Sensors (16) registriert wird, werden die Rohre um die Achsen der Reihe K begrenzt gedreht. Alle Rohre, in denen die Flüssigkeit in gleicher Richtung fliesst, werden in gleiche Richtung um die Achsen der Reihe K (K1,K3,K5,...,K2,K4,K6,...) durch Elektro-oder anderen Antrieb, gedreht (Fig.31).

8. Antikippkraftgenerator nach den Ansprüchen 4 und 7, dadurch gekennzeichnet, dass die ring-oder ovalförmigen Rohre mit Quecksilber (9) (oder andere schwere Flüssigkeit) gefüllt sind, wobei das Quecksilber oder die andere schwere Flüssigkeit) zum Fliessen gebracht wird durch eine Ferromagnetische Kugel (10) (oder genau wie das Rohr gebogene, Zylindrische Einheit 11,12), die so konstruiert ist, dass ihre Masse pro Volumen genau der Dichte des Quecksilbers (bzw. anderer Flüssigkeit) entspricht (Fig. 18b,21,33),wobei der Durchmesser der Kugel (bzw. der Zylindrischen Einheit) kleiner, oder fast wie der Innendurchmesser des Rohres ist, und diese in Kreisbewegung gesetzt wird (dadurch auch das Quecksilber bzw. die andere Flüssigkeit) durch eine vielzahl von Elektromagnetische Spulen (13) die ausserhalb- oder in das Rohr integriert sind (Fig.18b,21),bzw.die Beschleunigung der Kugel (bzw. der Zylindrischen Einheit) durch einen elektronischen Generator (14) (Steuereinheit), der die Spulen nach der Reihe eine nach der anderen, in eine bestimmte Richtung schnell einschaltet und ausschaltet (Rotierendes Magnetfeld) erreicht wird. Die Position der Kugel (bzw. Zylindrischen Einheit) wird durch die Induktivitäts-Sensoren (15) jederzeit genau bestimmt werden.

9. Antikippkraftgenerator, der das Umkippen eines Fahrzeugs während Kurvenfahrt oder bei Ausweichmanöver verhindert, dadurch gekennzeichnet, dass eine schnell um eine gelagerte, quer und waagerecht zum Fahrzeug liegende Achse Z, rotierende Schwungscheibe (19), die Antikippkräfte erzeugt, sodass die Drehrichtung der Schwungscheibe um die Achse Z der Gegenrichtung im Verhältnis zur Drehrichtung der Räder (20) des Fahrzeugs während der Fahrt entspricht, und im Verhältnis zum Fahrzeug die Richtung der gelagerten Achse Z festgelegt und nicht zu ändern ist (Fig.5; 6; 7; 8; 9; 15a,b,c,d).

10. Antikippkraftgenerator nach Anspruch 1, dadurch gekennzeichnet, dass die Dämpfung der Schwingungen, mechanisch mit Hilfe von mechanische Einrichtungen oder Magneten, ohne grosse Beteiligung der elektronischen Steuerung durchgeführt wird (Fig. 35).

11. Antikippkraftgenerator nach Anspruch 6, dadurch gekennzeichnet, dass sich die Sensoren S um die Achse Z elektronisch gesteuert bewegen können, oder dass mehrere solche Sensoren an verschiedene Stellen eingebaut sind (Fig.23), die je nach Bedarf einzeln durch elektronische schaltkreise (integrierte schaltungen oder Mikrochips die einen Gyromoment des Fahrzeugs durch Sensoren registrieren können) automatisch aktiviert und deaktiviert werden können um die Fahrtrichtung des Fahrzeugs zu beeinflussen, und das Fahrzeug in Grenzsituationen (Untersteuern, Übersteuern) zu beherrschen und stabilisieren.

12. Antikippkraftgenerator nach den Ansprüchen 1 und 2, dadurch gekennzeichnet, dass für in dem Rotor Q eingebauten Elemente die notwendige elektrische Energie mit Hilfe von Elektroden zugeführt wird, wobei das Gehäuse, in dem der Rotor Q sich befindet, vakuumiert und leicht mit Edelgasen gefüllt ist, sodass ohne mechanischen Kontakt ein Funke das Edelgas ionisiert, überbrückt ihn und ermöglicht einen Stromfluss senkrecht durch den Rotor Q und setzt damit gezielt die Blockiersystemen (37) (elektronische Dämpfer) der bestimmten Achsen H, sensorgesteuert und entsprechend zu die Betroffene Massen, in Bewegung. Der Strom fliesst durch die andere Elektrode aus dem Rotor Q (Fig.37), und somit ist der Stromkreis geschlossen.

13. Antikippkraftgenerator nach den Ansprüchen 1 bis 11, dadurch gekennzeichnet, dass die Energie für die Antriebskraft der Vorrichtung aus dem Motor des Fahrzeugs und (oder) Solarzellen (55), kombiniert mit eine Akku (57), entnommen wird, und er in der nähe des Fahrzeugmotors eingebaut, oder sogar im Motor integriert ist (Fig.9).

14. Antikippkraftgenerator nach Anspruch 13, dadurch gekennzeichnet, dass die Drehachse des Motors, bei Frontangetriebenen Fahrzeugen, quer und waagerecht zum Fahrzeug liegt, wobei die Drehrichtung der Kurbelwelle die Gegenrichtung im Verhältnis zu den Rädern des vorwärts fahrenden Fahrzeugs ("Links-drehender Motor"-47) darstellt, sodass die Antikippkraftvorrichtung unterstützt wird, da ein "Links-drehender Motor" in diesem Fall auch selber einigermassen als Antikippkraft-Quelle dient, vorausgesetzt, dass die Kurbelwelle ziemlich schwer ist, und sich die meisten der schnell rotierenden, schweren Mechanismen des Motors und des Getriebes in dieselbe Richtung wie die Kurbelwelle drehen (Fig.9,10,19b).

15. Vorrichtung, die das Umkippen eines frontangetriebenen Fahrzeugs während Kurvenfahrt oder Ausweichmanöver verhindert, dadurch gekennzeichnet, dass die Motorkurbelwelle (des Fahrzeugs) quer und waagerecht zum Fahrzeug liegt, sich von der linken Seite des Fahrzeugs aus gesehen im Uhrzeigersinn dreht ("Links-drehender Motor" 47), mit eine schwere Schwungscheibe (19) ausgestattet ist, um den Kraftmoment zu erzeugen, der das Fahrzeug in der Kurvenfahrt und beim Ausweichmanöver stabil hält, wobei die Achse der Schwungscheibe gelagert und mit einem Mechanismus ausgesttatet ist (z.b. Gesperre 49), der die sich schnell drehende Schwungsheibe nach dem Trägheitsmoment-Effekt konstant weiter frei drehen lässt, wenn z.b. der Motor plötzlich in einer niedrigeren Drehzahlbereich betrieben wird (Fig.32). Bei Rechts-drehenden Motoren (48) (die Kurbelwelle, die sich von der rechten Seite des Fahrzeugs aus gesehen, im Uhrzeigersinn dreht) wird die Schwungscheibe per Transmission in Gegenrichtung gedreht.

16. Antikippkraftgenerator, der das Umkippen eines Fahrzeugs während Kurvenfahrt oder bei Ausweichmanöver verhindert, dadurch gekennzeichnet, dass ein spiralförmiges Rohr mit mehreren Windungen, die jeweils senkrecht und längs zum Fahrzeug angeordnet sind, und in der eine Flüssigkeit (oder Quecksilber) schnell im geschlossenen Kreis im Uhrzeigersinn von der linken Seite des Fahrzeugs aus gesehen, fliesst, die Antikippkräfte erzeugt (Fig.40).

17. Antikippkraftgenerator nach den Ansprüchen 1 bis 15, dadurch gekennzeichnet, dass die Leistung des Antikippkraftgenerators gezielt programmiert und automatisch (oder manuell) so stark erhöht werden kann, dass das Fahrzeug bei Ausweichmanöver oder Kurvenfahrt sich so verhält, als wäre sein Schwerpunkt tiefer als die Fahrbahnebene (Fig.27).

18. Antikippkraftgenerator nach den Ansprüchen 1, 2, 3, 5, 6, 9, 10, und 11, dadurch gekennzeichnet, dass die schnell rotierende Massen (Ansprüchen 1, 2, 3, 5, 6, 10, 11) bzw. die Schwungscheibe (Anspruch 9) sich in einem hermetisch geschlossenen und vakuumierten Gehäuse befinden, um die Energieverluste, die entstehen würden durch den Luftwiderstand, auszuschliessen.

19. Antikippkraftgenerator nach Anspruch 8, dadurch gekennzeichnet, dass zwei oder mehrere ferromagnetische Kugeln (10) oder Zylindrische Einheiten (11, 12) in das Rohr angebracht sind, die im geschlossenen Kreis in einem konstanten Abstand zueinander im Rohr durch den elektromagnetischen Antrieb und synchrone Steuerung der elektromagnetischen Spulen (13) eines elektronischen Generators (14) sich schnell bewegen, und somit die Flüssigkeit (2) bzw. das Quecksilber (9) zum Fliessen bringen, und während der Antikippkraftgenerator langsam zum Stillstand zurückkehrt bzw. ausgeschaltet wird, werden die Dauermagneten (27) die Kugeln (bzw. Zylindrische Einheiten) in Abstand zueinander halten, sodass in einem Rotor (28) der sich im Inneren Plan befindet und sich um die Achse Zi drehen kann, schnell zu drehen beginnt, erreicht die Winkelgeschwindigkeit der Kugel (bzw. Zylindrische Einheiten ) und dann fahren die Dauermagneten zentrifugal von der Achse Zi ab, bis zu einer Distanz, die ausreichend ist, um die Kugeln (bzw. Zylindrische Enheiten ) im Magnetfeld abzufangen, beschleunigt sich negativ bis zum Nullwert (Stillstand). Das gleiche wird beim Start praktiziert, nun im umgekehrter reichenfolge und positiver Beschleunigung (Fig.25).

20. Antikippkraftgenerator nach Anspruch 1, dadurch gekennzeichnet, dass die Sensoren, welche die Schwingungen entdecken (64), Laserlichtstrahler (67), Dämpfungseinheiten (59) und Steuereinheit (58), welche die notwendige Massnahmen ergreift, um die Schwingungen zu dämpfen, im Stator (62) eingebaut sind (Fig.47).
